# EUROPÄISCHE PATENTSCHRIFT

(11) **EP 4 264 930 B1**
(45) Veröffentlichungstag und Bekanntmachung des Hinweises auf die Patenterteilung: **07.05.2025**
(21) Anmeldenummer: 21836140.0
(22) Anmeldetag: 13.12.2021
(51) Int. Cl.: H04L 69/321, H04L 9/40, H04L 12/66, G05B 19/418

(54) **GATEWAY, SPEZIELL FÜR OT-NETZWERKE**
GATEWAY, SPECIFICALLY FOR OT NETWORKS
PASSERELLE CONÇUE SPÉCIFIQUEMENT POUR DES RÉSEAUX OT

(30) Priorität: 15.12.2020 DE 102020133567
(43) Veröffentlichungstag der Anmeldung: 25.10.2023
(73) Patentinhaber: TRIOVEGA GmbH, 23560 Lübeck (DE)
(72) Erfinder: HEINTEL, Benedikt, 57399 Kirchhundem (DE); LUIG, Alexander, 59889 Eslohe (DE); ROMANCZYK, Paul, 58095 Hagen (DE); WALZ, Simon, 38106 Braunschweig (DE); GAEBEL, Clark, 23562 Lübeck (DE); KAZAKOV, Dmitry, 23552 Lübeck (DE)
(74) Vertreter: Cohausz & Florack
(86) Internationale Anmeldenummer: PCT/EP2021/085338
(87) Internationale Veröffentlichungsnummer: WO 2022/128829

(56) Entgegenhaltungen:
- WO-A1-2011/151768
- WO-A1-2017/084535
- CN-A- 111 917 689
- CN-B- 104 460 657
- CN-B- 104 753 936
- CN-U- 205 670 253
- JP-A- 2014 175 828
- KR-B1- 101 736 223

## Beschreibung

Die Erfindung betrifft eine Vorrichtung, umfassend eine erste Schnittstelle zur Kommunikation mit einem ersten Kommunikationsnetzwerk und eine zweite Schnittstelle zur Kommunikation mit einem vom ersten Kommunikationsnetzwerk separaten zweiten Kommunikationsnetzwerk. Weiterhin betrifft die Erfindung ein System mit einem ersten Kommunikationsnetzwerk, mit einem vom ersten Kommunikationsnetzwerk separaten zweiten Kommunikationsnetzwerk und mit der zuvor genannten Vorrichtung. Weiterhin betrifft die Erfindung ein Verfahren.

In Produktions- und Industrieanlagen wird Hardware und Software zur Steuerung und Regelung, Überwachung und/oder Kontrolle von Maschinen, Anlagen und Prozessen eingesetzt. Während diese, auch als Operational Technology (OT) bezeichnete Hardware und Software früher vor allem in geschlossenen Systemen betrieben wurde, erfolgt heute immer häufiger eine Anbindung an die IT-Infrastruktur des Unternehmens, wodurch sich einerseits verschiedene Vorteile wie ein höherer Automatisierungsgrad oder eine Remote-Überwachung, -Steuerung oder -Wartung erreichen lassen, sich andererseits jedoch auch neue Herausforderungen wie zum Beispiel Inkompatibilitäten von Systemen und Protokollen oder eine erhöhte Anfälligkeit für Cyberangriffe ergeben.

Erschwert wird dies dadurch, dass die in einer Produktions- oder Industrieanlage eingesetzte Soft- und Hardware aus Gründen der Kompatibilität oder der Gewährleistung oftmals nicht verändert werden kann. Damit einhergehend ist eine Installation von Software- oder Sicherheitsupdates, die Deaktivierung nicht benötigter Kommunikationsschnittstellen oder die allgemeine Anpassung der Konfiguration bei einer Vielzahl von OT-Systemen nicht möglich. Die Absicherung der bereits identifizierten Schwachstellen eines OT-Systems einer Produktions- oder Industrieanlage kann so nur vereinzelt und nach Rücksprache mit dem jeweiligen Hersteller durchgeführt werden. Ein eigenständiges Verändern der Soft- und Hardware kann demgegenüber zu einem Ausfall der gesamten Anlage oder einem Verlust von Gewährleistung führen.

Im industriellen Umfeld werden aufgrund des ursprünglichen Einsatzes der OT-Systeme in einer isolierten Umgebung zudem häufig proprietäre Protokolle eingesetzt, welche für eine Kommunikation in einer heterogenen und hoch vernetzten Umgebung mit unterschiedlichen IT- und OT-Systemen nicht geeignet sind. Um eine Kommunikation dennoch zu ermöglichen, werden zunehmend Middelware, insbesondere sogenannte Konverter eingesetzt, die bei einer Direktverbindung eine Übersetzung der Protokolle durchführen. Diese Konverter ermöglichen zwar die Kommunikation zwischen Netzwerken mit verschiedenen Protokollen, tragen jedoch nur eingeschränkt zur Sicherheitserhöhung, zum Beispiel gegen Cyberangriffe, bei.

Vor dem Hintergrund einer zunehmenden Integration von OT-Systemen in die Netzwerk-Infrastrukturen der IT-Systeme entstehen somit Risiken hinsichtlich eines sicheren Betriebs und einer Gewährleistung der Schutzziele Verfügbarkeit, Integrität und Vertraulichkeit der integrierten OT-Systeme als auch für die Korrektheit der Übersetzung der Daten zwischen unterschiedlichen Protokollen mit Hilfe von Konvertern.

Um die entstandenen Risiken zu vermindern, werden die OT-Systeme einer Produktions- oder Industrieanlage zum Teil in isolierten Segmenten der globalen Netzwerk-Infrastruktur betrieben. Eine solche Segmentierung der Netzwerk-Infrastruktur wird oftmals mit Hilfe eines Firewall-Systems realisiert, welches die Einschränkung der Kommunikation auf die zwingend notwendigen Protokolle für den Betrieb ermöglicht. Auf diese Weise wird zwar die Sicherheit erhöht, jedoch zum Teil noch nicht in dem gewünschten Maße.

Hinzu kommt, dass die Hersteller der Produktions- und Industrieanlagen die OT-Hardware entsprechend der geplanten Steuerungskomponenten konzipieren und dabei primär Rücksicht auf den Steuerungstakt des betrieblichen Produktionsprozesses nehmen, jedoch nicht auf die durch den Kunden eingesetzte spezifische Software zur Absicherung der Systeme. Daraus resultiert, dass die durch den Hersteller bereitgestellte Hardware nach der Installation der sicherheitsrelevanten Software oftmals sehr träge wird und die eingesetzte Steuerungssoftware nicht mehr ordnungsgemäß funktioniert.

Aus der WO 2011/151768 A1 ist ein Fabrikkommunikationsnetzwerk mit Netzwerkswitchen bekannt, die einen Datenformatübersetzer und eine Anwendungsbezogene Paketinspektionseinheit zur Bedrohungserkennung aufweisen. Aus der KR 101 736 223 B1 ist eine industrielle Netzwerksicherheitsvorrichtung mit einem Paketanalysator und -filter bekannt.

Vor diesem Hintergrund liegt der vorliegenden Erfindung die Aufgabe zu Grunde, ein Verfahren, eine Vorrichtung und ein System zur Absicherung von Netzwerken, insbesondere OT-Netzwerken, in einer ggf. heterogenen und zum Beispiel mit dem Internet verbundenen Netzwerk-Infrastruktur zur Verfügung zu stellen.

Diese Aufgabe wird erfindungsgemäß gelöst durch ein im unabhängigen Anspruch 16 definiertes Verfahren.

Bei dem Extrahieren der Informationseinheit werden insbesondere die von dem ersten zum zweiten Kommunikationsnetzwerk zu kommunizierenden Daten, insbesondere Prozessdaten, aufgeschlüsselt.

Bei dem Prüfen der extrahierten Informationseinheit erfolgt insbesondere eine Zugriffssteuerung auf Applikationsebene, d.h. der Zugriff auf das zweite Kommunikationsnetzwerk anhand der zu kommunizierenden Daten wird insbesondere auf der Applikationsschicht gesteuert, indem die Informationseinheit auf dieser Schicht geprüft wird.

Bei dem Erzeugen der Ausgangsnachricht erfolgt insbesondere eine Aufbereitung der zu kommunizierenden Daten, insbesondere Prozessdaten, und zwar insbesondere in ein innerhalb des zweiten Kommunikationsnetzwerkes verwendetes Kommunikationsprotokoll, das zum Beispiel auch ein Feldbus-Protokoll sein kann, wie es in OT-Netzwerken häufig verwendet wird.

Bei der ersten Schnittstelle handelt es sich um eine Schnittstelle zur Kommunikation mit einem ersten Kommunikationsnetzwerk. Entsprechend ist die erste Schnittstelle vorzugsweise mit einem ersten Kommunikationsnetzwerk verbunden.

Bei der zweiten Schnittstelle handelt es sich um eine Schnittstelle zur Kommunikation mit einem vom ersten Kommunikationsnetzwerk separaten zweiten Kommunikationsnetzwerk. Entsprechend ist die zweite Schnittstelle vorzugsweise mit einem vom ersten Kommunikationsnetzwerk separaten zweiten Kommunikationsnetzwerk verbunden.

Die oben genannte Aufgabe wird erfindungsgemäß weiterhin gelöst durch eine im unabhängigen Anspruch 1 definierte Vorrichtung sowie durch einen im unabhängigen Anspruch 17 definierten Computerprogrammcode.

Die Eingangsnachricht wird über die erste Schnittstelle der Vorrichtung empfangen. Weiterhin wird die Ausgangsnachricht über die zweite Schnittstelle der Vorrichtung versendet.

Die oben genannte Aufgabe wird weiterhin erfindungsgemäß gelöst durch ein im Anspruch 13 definiertes System, mit einem ersten Kommunikationsnetzwerk, mit einem vom ersten Kommunikationsnetzwerk separaten zweiten Kommunikationsnetzwerk und mit der zuvor beschriebenen Vorrichtung oder einer Ausführungsform davon, wobei die erste Schnittstelle mit dem ersten Kommunikationsnetzwerk verbunden ist und die zweite Schnittstelle mit dem zweiten Kommunikationsnetzwerk verbunden ist.

Das Verfahren, die Vorrichtung und das System ermöglichen jeweils eine sichere und zuverlässige Kommunikation zwischen zwei separaten Kommunikationsnetzwerken.

Insbesondere kann mit dem Verfahren, der Vorrichtung und dem System jeweils eine praktisch vollständige Entkopplung der notwendigen Kommunikationsverbindungen zwischen zwei Kommunikationsnetzwerken, insbesondere zwischen zwei logisch segmentierten Netzwerk-Infrastrukturen eines IT- und OT-Systems, insbesondere zwischen einem IT-Netzwerk und einem OT-Netzwerk, erreicht werden. Auf diese Weise können der Betrieb einer Produktions- oder Industrieanlage abgesichert und die Gewährleistung der Schutzziele Verfügbarkeit, Integrität und Vertraulichkeit ermöglichen werden, insbesondere unabhängig von dem eingesetzten Betriebssystem, von bereits bekannten Sicherheitslücken oder von den bereitgestellten Diensten.

Die Vorrichtung umfasst eine erste und eine zweite Schnittstelle zur Kommunikation mit einem ersten bzw. zweiten Kommunikationsnetzwerk. Bei der ersten und/oder zweiten Schnittstelle kann es sich insbesondere um eine Ethernet-Schnittstelle handeln. Es ist aber denkbar, dass zumindest eine der Schnittstellen für eine andere Datennetztechnik eingerichtet ist, beispielsweise für eine proprietäre OT-Datennetztechnik.

Die Eingangsnachricht weist eine erste Schichtstruktur auf und enthält eine der obersten Schicht der ersten Schichtstruktur zugeordnete Informationseinheit. Unter einer Schichtstruktur wird die Folge der verwendeten Schichten gemäß dem OSI-Referenzmodell mit ihren jeweils zugeordneten Protokollen verstanden. Der einer Schichtstruktur zugeordnete Protokollstapel ist entsprechend die Folge der für die einzelnen Schichten der Schichtstruktur verwendeten Protokolle.

Bei der obersten Schicht kann es sich insbesondere um die Applikationsschicht gemäß dem OSI-Referenzmodell handeln. Die erste Schichtstruktur weist mehrere Schichten gemäß dem OSI-Referenzmodell auf. Insbesondere kann die erste Schichtstruktur alle sieben Schichten (Bitübertragungsschicht, Sicherungsschicht, Netzwerkschicht, Transportschicht, Sitzungsschicht, Darstellungsschicht, Applikationsschicht) des OSI-Referenzmodells aufweisen. Es ist aber auch denkbar, dass die erste Schichtstruktur nur einige der sieben Schichten des OSI-Referenzmodells aufweist.

Die Eingangsnachricht kann in mehrere Pakete aufgeteilt sein.

Die Informationseinheit wird extrahiert, indem die Eingangsnachricht durch einen der ersten Schichtstruktur zugeordneten Protokollstapel von unten nach oben durchlaufen gelassen wird. Auf diese Weise wird die Eingangsnachricht schichtweise gemäß dem für die jeweilige Schicht verwendeten Protokoll dekodiert, so dass als Ergebnis die dekodierte Informationseinheit erhalten und somit aus der Eingangsnachricht extrahiert wird.

Bei der Informationseinheit kann es sich insbesondere um Prozess-Informationen, insbesondere von einer OT-Hardware oder für eine OT-Hardware, handeln. Insbesondere kann es sich bei den Prozess-Informationen um Mess- und/oder Steuerdaten, Maschinen-Statusdaten, Dateien (zum Beispiel CNC-Programme oder Software-Updates), Video- und/oder Audio-Streams (zum Beispiel von Prozessüberwachungskameras) oder um Bildschirminhalte (zum Beispiel von Steuerbildschirmen einer OT-Hardware) handeln.

Die extrahierte Informationseinheit wird zum Erhalt eines Prüfungsergebnisses geprüft. Auf diese Weise können unmittelbar die dekodierten Daten der Informationseinheit überprüft werden, zum Beispiel auf deren Konformität mit einer vorgegebenen Anforderung zum Beispiel hinsichtlich des Formats oder Wertebereichs und/oder auf deren Sicherheit.

Das Prüfungsergebnis kann insbesondere eine Information enthalten, die anzeigt, ob ein Erzeugen und/oder Verwenden einer Ausgangsnachricht auf Basis der extrahierten Informationseinheit erfolgen soll. Das Prüfungsergebnis kann auch eine Information enthalten, die anzeigt, ob und optional wie eine Informationseinheit auf Basis der extrahierten Informationseinheit erzeugt werden soll, auf deren Basis die Ausgangsnachricht zu erzeugen ist. Beispielsweise kann das Prüfungsergebnis eine Information über eine vorzunehmende Verarbeitung der Informationseinheit, beispielsweise eine Formatierung oder Umwandlung in der Informationseinheit enthaltener Prozess-Daten zur Erzeugung einer neuen Informationseinheit enthalten, auf deren Basis die Ausgangsnachricht zu erzeugen ist. Das Prüfungsergebnis kann auch eine Information enthalten, die anzeigt, ob und optional welche Ereignis-Ausgangsnachricht erzeugt und versandt werden soll. Eine solche Ereignis-Ausgangsnachricht kann zum Beispiel ein Überwachungssystem über ein negatives Prüfungsergebnis (z.B. Informationseinheit mit Schadcode oder unzulässigem Inhalt) informieren.

Auf Basis der Prozess-Informationen, die durch die Extraktion der Informationseinheit zur Verfügung gestellt werden, kann die Prüfung, insbesondere Zugriffssteuerung, auf Applikationsebene insbesondere entscheiden, welche Aktionen auf Grundlage der Prozess-Informationen durchzuführen sind, um die Sicherheit der Betriebsmittel, insbesondere die Sicherheit von an das zweite Kommunikationsnetzwerk angeschlossenen Geräten wie zum Beispiel Produktionsmaschinen, und die Sicherheit von Personen sicherzustellen. Insbesondere kann das Prüfungsergebnis eine Entscheidung umfassen, welche Aktionen auf Grundlage der Prozess-Informationen durchzuführen sind.

Die Ausgangsnachricht wird erzeugt, indem die extrahierte Informationseinheit oder eine auf Basis der extrahierten Informationseinheit erzeugte Informationseinheit durch einen zweiten Protokollstapel von oben nach unten durchlaufen gelassen wird. Auf diese Weise wird eine Ausgangsnachricht mit einer zweiten Schichtstruktur erzeugt, die dem zweiten Protokollstapel zugeordnet ist.

Die Ausgangsnachricht kann in mehrere Pakete aufgeteilt versendet werden.

Die zweite Schichtstruktur weist mehrere Schichten gemäß dem OSI-Referenzmodell auf. Insbesondere kann die zweite Schichtstruktur alle sieben Schichten des OSI-Referenzmodells aufweisen. Es ist aber auch denkbar, dass die zweite Schichtstruktur nur einige der sieben Schichten des OSI-Referenzmodells aufweist. Weiterhin können die erste und die zweite Schichtstruktur und/oder der erste und zweite Protokollstapel übereinstimmen. Es ist aber auch denkbar, dass sich die zweite Schichtstruktur von der ersten Schichtstruktur und/oder der erste Protokollstapel vom zweiten Protokollstapel unterscheiden. Auf diese Weise kann insbesondere ein Datenaustausch zwischen verschiedenartigen Kommunikationsnetzwerken erfolgen, in denen verschiedene Protokolle verwendet werden.

Die Ausgangsnachricht kann mit der extrahierten Informationseinheit selbst oder mit einer auf Basis der extrahierten Informationseinheit erzeugten Informationseinheit erzeugt werden. Demnach kann insbesondere auch eine Verarbeitung der extrahierten Informationseinheit zur Erzeugung der auf Basis der extrahierten Informationseinheit erzeugten Informationseinheit erfolgen, die zum Beispiel eine Formatierung oder Konvertierung der Informationseinheit umfassen kann.

Das Erzeugen und/oder Versenden der Ausgangsnachricht werden abhängig vom Prüfungsergebnis durchgeführt. Insbesondere können auf diese Weise anhand der Prüfung, insbesondere Zugriffssteuerung, vorgesehene Aktionen umgesetzt werden.

Beispielsweise kann vorgesehen sein, dass die Ausgangsnachricht nur dann erzeugt und/oder versendet wird, wenn das Prüfungsergebnis positiv ist bzw. eine entsprechende Information hierüber enthält, zum Beispiel, wenn bei der Prüfung festgestellt wurde, dass die Informationseinheit mit einer vorgegebenen Anforderungen konform und/oder sicher ist, zum Beispiel keinen Schadcode enthält.

Weiterhin kann vorgesehen sein, dass eine Informationseinheit auf Basis der extrahierten Informationseinheit erzeugt und auf deren Basis wiederum die Ausgangsnachricht erzeugt wird, wenn das Prüfungsergebnis eine entsprechende Information hierüber enthält.

Es ist weiterhin denkbar, dass bei negativem Prüfungsergebnis oder wenn das Prüfungsergebnis eine Information hierüber enthält, eine Ereignis-Ausgangsnachricht erzeugt und versendet wird, insbesondere über die zweite Schnittstelle. Die Ereignis-Ausgangsnachricht kann beispielsweise eine Information über das negative Prüfungsergebnis enthalten. Auf diese Weise kann zum Beispiel ein Überwachungssystem des Netzwerks über ein sicherheitsrelevantes Ereignis, insbesondere das negative Prüfungsergebnis, informiert werden.

Durch das Extrahieren der Informationseinheit aus der Eingangsnachricht und deren Prüfung auf der obersten Schicht werden die zwischen dem ersten und zweiten Netzwerk auszutauschenden Daten aufgeschlüsselt, so dass die Daten der Kommunikation zwischen den beiden Netzwerken erhalten und analysiert werden können, insbesondere hinsichtlich der relevanten Prozess-Informationen. Insbesondere wird die Kommunikation auf diese Weise derart aufgeschlüsselt, dass nur noch die reinen Informationen mit bekanntem Systemverhalten weiterverarbeitet, insbesondere geprüft und abhängig von der Prüfung versandt oder verarbeitet werden.

Durch das Extrahieren der reinen Informationen in der Informationseinheit und das gesonderte Erzeugen einer entsprechenden Ausgangsnachricht wird die Kommunikation zwischen den beiden Kommunikationsnetzwerken in zwei separate Kanäle aufgebrochen und somit eine asynchrone Kommunikation bewirkt, wodurch die Sicherheit erhöht wird.

Zudem können auf diese Weise verschiedene Protokolle und Feldbus-Systeme mit verschiedenen Schichtstrukturen angesprochen werden, so dass eine sichere und zuverlässige Kommunikation zwischen unterschiedlichen Netzwerken erreicht wird.

Anders als beim Einsatz eines Firewall-Systems wird der Aufbau einer direkten Kommunikationsverbindung zwischen Systemen, welche sich in unterschiedlichen Segmenten der Netzwerk-Infrastruktur, insbesondere im ersten und zweiten Kommunikationsnetzwerk, befinden, vorzugsweise nicht unterstützt.

Insbesondere werden Kommunikationsverbindungen zwischen einem IT- und einem OT-System vorzugsweise ausschließlich getrennt hergestellt.

Die Schritte des zuvor beschriebenen Verfahrens betreffen die Kommunikation von der ersten Schnittstelle zur zweiten Schnittstelle bzw. vom ersten Kommunikationsnetzwerk zum zweiten Kommunikationsnetzwerk. Vorzugsweise erfolgt auch eine Kommunikation in die Rückrichtung. Entsprechend ist die Vorrichtung vorzugsweise auch zur Kommunikation von der zweiten Schnittstelle zur ersten Schnittstelle bzw. vom zweiten Kommunikationsnetzwerk zum ersten Kommunikationsnetzwerk eingerichtet. Die Kommunikation in dieser Rückrichtung kann ebenfalls asynchron, insbesondere mit einer Prüfung von Informationseinheiten auf der obersten Schicht, oder alternativ auch synchron und/oder ohne Prüfung der Informationseinheiten auf der obersten Schicht erfolgen.

Die abhängig vom Prüfungsergebnis erzeugte und/oder versendete Ausgangsnachricht können auf diese Weise, beispielsweise in Abhängigkeit ihrer Herkunft, insbesondere unterschiedlichen Systemen zur Verfügung gestellt werden. Mögliche Beispiele sind die Bereitstellung der Prozess-Informationen einer Produktions- oder Industrieanlage für ein an das erste oder zweite Kommunikationsnetzwerk angeschlossenes Leitsystem für betriebliche Produktionsprozesse oder die Übertragung von CNC-Programmen an eine an das erste oder zweiten Kommunikationsnetzwerk angeschlossene entsprechende Maschine.

Im Folgenden werden verschiedene Ausführungsformen der Vorrichtung, des Systems und des Verfahrens beschrieben, wobei die einzelnen Ausführungsformen unabhängig voneinander jeweils sowohl für die Vorrichtung, für das System als auch für das Verfahren gelten. Darüber hinaus können die einzelnen Ausführungsformen beliebig untereinander kombiniert werden.

Bei einer ersten Ausführungsform werden das Erzeugen und/oder das Versenden der Ausgangsnachricht nur bei positivem Prüfungsergebnis durchgeführt. Auf diese Weise kann eine Weiterleitung fehlerhafter oder schadhafter Informationseinheiten an das zweite Kommunikationsnetzwerk verhindert werden.

Bei einer weiteren Ausführungsform umfasst das Prüfen der extrahierten Informationseinheit: Prüfen der extrahierten Informationseinheit auf Schadcode. Beispielsweise kann eine Prüfung der extrahierten Informationseinheit mittels eines Antivirenscanners erfolgen. Die Überprüfung auf der Applikationsebene erleichtert das Auffinden von Schadcode gegenüber der Prüfung durch Protokolle des Schichtenstapels codierter Informationen. Auf diese Weise lässt sich eine höhere Sicherheit der Kommunikation zwischen den Kommunikationsnetzwerken erreichen.

Insbesondere können für die Vorrichtung oder für das System hostbasierte Antiviren- und Firewall-Lösungen vorgesehen werden, um die Vorrichtung und/oder die Kommunikation zwischen dem ersten und zweiten Kommunikationsnetzwerk weitergehend schützen. Beispielsweise kann eine Firewall in die Vorrichtung integriert sein. Die Prüfung, insbesondere Zugriffssteuerung, umfasst vorzugsweise Abwehrfunktionen für ein oder mehrere der folgenden Szenarien:
- Einschleusungsversuche von Schadcode(Malware);
- Denial-of-Service (DoS-Angriff);
- Datendiebstahl;
- Sabotage von Maschinen;
- Illegitime Nutzung von IT-Systemen, um weitere IT-Systeme anzugreifen (Zombies und Bots).

Bei einer weiteren Ausführungsform umfasst das Prüfen der extrahierten Informationseinheit: Prüfen der extrahierten Informationseinheit auf Übereinstimmung mit einem Eintrag in einer vorgegebenen Liste von zulässigen Informationseinheiten und/oder in einer vorgegebenen Liste von unzulässigen Informationseinheiten. Auf diese Weise kann die extrahierte Informationseinheit mit einer Whitelist zulässiger Informationseinheiten und/oder mit einer Blacklist unzulässiger Informationseinheiten abgeglichen werden. Die Whitelist kann beispielsweise zulässige Informationsformate oder zulässige Wertebereiche für die Informationseinheit vorgeben. Entsprechend kann die Blacklist beispielsweise unzulässige Informationsformate oder unzulässige Wertebereiche für die Informationseinheit vorgeben. Auf diese Weise kann eine sehr hohe Sicherheit bei der Weiterleitung der Informationseinheiten erreicht werden.

Bei einer weiteren Ausführungsform umfasst das Prüfen der extrahierten Informationseinheit: Prüfen der extrahierten Informationseinheit auf Konformität mit einer oder mehreren vorgegebenen Datenkonformitätsanforderungen, insbesondere für ein an das zweite Kommunikationsnetzwerk anschließbares oder angeschlossenes Gerät. Auf diese Weise kann die Prüfung beispielsweise an installationsspezifische Vorgaben angepasst werden. Beispielsweise können die Datenkonformitätsanforderungen Anforderungen über zulässige Steuerbefehle oder zulässige Parametereinstellungen für ein am zweiten Kommunikationsnetzwerk angeschlossenes Gerät, wie zum Beispiel eine Produktionsmaschine, umfassen. Auf diese Weise kann bereits vor einem Versenden einer Ausgangsnachricht an das zweite Kommunikationsnetzwerk, insbesondere an das daran angeschlossene Gerät, sichergestellt werden, dass die Informationseinheit keine unzulässigen Steuerbefehle oder unzulässige Parametereinstellungen enthält, die das angeschlossene Gerät stören oder sogar beschädigen könnten.

Die Datenkonformitätsanforderungen können auch Konsistenzprüfungen und/oder Plausibilitätsprüfungen umfassen, zum Beispiel durch eine Zugriffssteuerung, die den Zugriff auf bestimmte an das zweite Kommunikationsnetzwerk angeschlossene Geräte nur unter bestimmten Umständen, von bestimmten Nutzern und/oder mit einem bestimmten Passwort oder Zertifikat erlaubt. Auf diese Weise wird insbesondere eine Konsistenz- und/oder Plausibilitätsprüfung der zu kommunizierenden Daten im Sinne der IT-Sicherheit und der funktionalen Sicherheit spezifisch für Maschinen und Prozesssteuerungen ermöglicht. Dies erlaubt eine Integritätsprüfung der übertragenen Inhalte und Daten.

Die vorgebbaren Datenkonformitätsanforderungen sind vorzugsweise administrierbar bzw. programmierbar, beispielsweise über eine Administrations-Schnittstelle bzw. -ebene der Vorrichtung, so dass diese je nach Bedarf angepasst werden können. Insbesondere können auf diese Weise Regeln über Daten von tatsächlich angeschlossenen Maschinen bedarfsgemäß erstellt oder angepasst werden.

Vorzugsweise sind für die Prüfung, insbesondere Zugriffssteuerung, auf der Applikationsschicht Maschinen-Informationen über die Prozesse der zum Beispiel an das zweite Kommunikationsnetzwerk angeschlossenen Produktions-Maschinen und deren Funktionsweise bekannt und/oder auf einem Speicher der Vorrichtung hinterlegt, insbesondere in Form von Datenkonformitätsanforderungen. Insbesondere können diese Maschinen-Informationen durch einen Administrator anhand von Regeln, nämlich Datenkonformitätsanforderungen, eingegeben oder programmatisch spezifisch für eine Produktions-Maschinenart umgesetzt werden. Mit den Datenkonformitätsanforderungen kann insbesondere festgelegt werden, welche Aktionen (zum Beispiel Erzeugen und/oder Versenden einer Ausgangsnachricht, Erzeugen und/oder Versenden einer Ereignis-Ausgangsnachricht) auf Basis der Maschinen-Informationen und der Prozess-Informationen durchgeführt werden und welche nicht.

Durch die Prüfung, insbesondere Zugriffssteuerung, können auf diese Weise zum Beispiel Prozess-Informationen akzeptiert und in Form einer Ausgangsnachricht versandt werden, oder weiter verarbeitet, insbesondere übersetzt oder neu aus anderen Prozess-Informationen erstellt werden, bevor eine auf dieser Basis erzeugte Informationseinheit in Form einer Ausgangsnachricht versandt wird. Da die Zugriffsteuerung individuell für verschiedene Datentypen, Maschinentypen und erwünschter Anwendung realisiert werden kann, sind auch hochgradig anwendungsspezifische Fälle möglich.

Bei einer weiteren Ausführungsform umfasst das Prüfen der extrahierten Informationseinheit:
- Empfangen einer aktuellen Datenkonformitätsanforderungsinformation über die zweite Schnittstelle und
- Prüfen der extrahierten Informationseinheit auf Konformität mit einer der empfangenen aktuellen Datenkonformitätsanforderungsinformation zugeordneten Datenkonformitätsanforderung.

Auf diese Weise kann die Prüfung insbesondere abhängig vom aktuellen Zustand eines an das zweite Kommunikationsnetzwerk angeschlossenen Geräts, beispielsweise einer Produktionsmaschine, erfolgen. Insbesondere ist es denkbar, dass die für ein Gerät zulässigen Steuerbefehle oder Parameterbereiche vom aktuellen Zustand des Geräts abhängen. Dies kann durch die vorliegende Ausführungsform berücksichtigt werden.

Die aktuelle Datenkonformitätsanforderungsinformation kann beispielsweise die Datenkonformitätsanforderung, wie zum Beispiel zulässige Steuerbefehle oder Wertebereiche, selbst enthalten. Weiterhin kann die Datenkonformitätsanforderungsinformation auch eine Information enthalten, die die Bestimmung einer zugeordneten Datenkonformitätsanforderung ermöglicht. Beispielsweise kann die Datenkonformitätsanforderungsinformation eine Information über einen Wert eines Zustandsparameters eines an das zweite Kommunikationsnetzwerk angeschlossenen Geräts enthalten, mit dem sich die für diesen Zustandsparameterwert zulässigen Steuerbefehle oder Parameterbereich bestimmen lassen. Zu diesem Zweck sind auf einem Speicher der Vorrichtung vorzugsweise Informationen über mehrere Datenkonformitätsanforderungen für verschiedene Werte eines oder mehrere Zustandsparameter hinterlegt. Insbesondere kann auf der Vorrichtung ein sogenannter virtueller Zwilling eines oder mehrerer an das zweite Kommunikationsnetzwerk angeschlossener Geräte erzeugt werden, in dem der jeweilige Betriebszustand des betreffenden Geräts abgebildet ist, so dass die Prüfung der Informationseinheit abhängig vom aktuellen Zustand des betreffenden Geräts erfolgen kann.

Die aktuelle Datenkonformitätsanforderung kann insbesondere nach Versenden einer Anfrage nach einer aktuellen Datenkonformitätsanforderungsinformation, beispielsweise nach einem aktuellen Gerätezustand, empfangen werden. Weiterhin ist es denkbar, dass in regelmäßigen Abständen aktuelle Datenkonformitätsanforderungsinformationen empfangen werden, mit denen zum Beispiel ein virtueller Zwilling aktuell gehalten werden kann.

Erfindungsgemäß umfasst die Vorrichtung weiter mindestens einen Datenspeicher, und der mindestens eine Speicher und der Computerprogrammcode sind weiter dazu eingerichtet, mit dem mindestens einen Prozessor die Vorrichtung weiter dazu zu veranlassen, die Informationseinheit oder eine auf Basis der extrahierten Informationseinheit erzeugte Informationseinheit abhängig vom Prüfungsergebnis auf dem Datenspeicher zwischen zu speichern, wobei das Erzeugen der Ausgangsnachricht umfasst: Erzeugen der Ausgangsnachricht mittels Durchlaufenlassen der zwischengespeicherten Informationseinheit oder einer auf Basis der zwischengespeicherten Informationseinheit erzeugten Informationseinheit durch einen einer zweiten Schichtstruktur zugeordneten Protokollstapel von oben nach unten. Auf diese Weise wird die extrahierte Informationseinheit oder eine auf Basis der extrahierten Informationseinheit erzeugte Informationseinheit nach der Prüfung zunächst zwischengespeichert. Auf diese Weise kann das Versenden der Ausgangsnachricht zeitlich vom Empfang der Eingangsnachricht entkoppelt werden. Dies erleichtert zum Beispiel die Informationsübertragung in ein zweites Kommunikationsnetzwerk mit getaktetem Informationsaustausch. Weiterhin wird auf diese Weise ermöglicht, dass ein am zweiten Kommunikationsnetzwerk angeschlossenes Gerät die betreffende Informationseinheit bzw. Ausgangsnachricht zu einem Zeitpunkt abruft, der unabhängiger vom Zeitpunkt des Empfangs der Eingangsnachricht ist.

Bei einer weiteren Ausführungsform weist der Datenspeicher eine Datenbankstruktur auf und das Zwischenspeichern der extrahierten Informationseinheit oder der auf Basis der extrahierten Informationseinheit erzeugten Informationseinheit auf dem Datenspeicher erfolgt in der Datenbankstruktur. Auf diese Weise ist eine geordnete Ablage der extrahierten oder erzeugten Informationseinheiten möglich, die insbesondere einen gezielten Abruf der Informationseinheiten aus dem zweiten Kommunikationsnetzwerk erleichtert. Die Prüfung umfasst in diesem Fall vorzugsweise eine Konformitätsprüfung der extrahierten Informationseinheit mit der Datenbankstruktur. Beispielsweise kann die Datenbankstruktur lediglich bestimmte Datenformate oder Datenbereiche, beispielsweise Zahlenbereiche, zulassen.

Erfindungsgemäß sind der mindestens eine Speicher und der Computerprogrammcode weiter dazu eingerichtet, mit dem mindestens einen Prozessor die Vorrichtung weiter dazu zu veranlassen, eine Informationsanfrage über die zweite Schnittstelle zu erhalten, wobei das Erhalten, insbesondere das Erzeugen, und/oder das Versenden der Ausgangsnachricht als Reaktion auf den Erhalt der Informationsanfrage durchgeführt werden. Auf diese Weise wird ermöglicht, dass ein Gerät im zweiten Kommunikationsnetzwerk eine Information bedarfsmäßig abholt, insbesondere zu einem Zeitpunkt, der unabhängig vom Zeitpunkt des Empfangs der Eingangsnachricht sein kann.

Bei einer weiteren Ausführungsform weist die Vorrichtung weiter einen ersten Datenspeicher und einen zweiten Datenspeicher auf und der mindestens eine Speicher und der Computerprogrammcode sind weiter dazu eingerichtet, mit dem mindestens einen Prozessor die Vorrichtung weiter dazu zu veranlassen, die extrahierte Informationseinheit auf dem ersten Datenspeicher zu speichern, wobei das Prüfen der extrahierten Informationseinheit umfasst: Prüfen der auf dem ersten Datenspeicher gespeicherten Informationseinheit zum Erhalt eines Prüfungsergebnisses, und der mindestens eine Speicher und der Computerprogrammcode sind weiter dazu eingerichtet, mit dem mindestens einen Prozessor die Vorrichtung weiter dazu zu veranlassen, die extrahierte Informationseinheit oder eine auf Basis der extrahierten Informationseinheit erzeugte Informationseinheit abhängig vom Prüfungsergebnis auf dem zweiten Datenspeicher zu speichern. Auf diese Weise kann auch die Prüfung unabhängiger vom Eingang der Eingangsnachricht erfolgen, wobei das Umspeichern vom ersten auf den zweiten Datenspeicher nach der Prüfung erfolgt. Der erste und der zweite Datenspeicher können als zwei physikalisch getrennte Datenspeicher oder alternativ auch als zwei getrennte Datenspeicherbereiche auf einem physikalischen Datenspeicher vorgesehen sein.

Bei einer weiteren Ausführungsform ist die Vorrichtung dazu eingerichtet, Informationseinheiten aus Eingangsnachrichten mit unterschiedlichen Schichtstrukturen zu extrahieren mittels Durchlaufenlassen der jeweiligen Eingangsnachricht durch einen der jeweiligen Schichtstruktur zugeordneten Protokollstapel von unten nach oben. Auf diese Weise kann die Vorrichtung eingangsseitig verschiedene Protokolle bzw. Protokollstapel unterstützen, wodurch die Flexibilität und Kompatibilität der Vorrichtung erhöht wird. Als Protokolle kommen zum Beispiel in Betracht: SMB, FTP, http für Dateien, OPC-UA, Feldbus-Protokolle für allgemeine Daten, RDP, VNC, SSH, Telnet für Desktop-Daten, zum Beispiel Bildschirminhalte.

Durch die zuvor beschriebene Ausführungsform können insbesondere Prozess-Informationen aus verschiedenen Protokollen extrahiert sowie einer übergeordneten Schicht in einer einheitlichen Schnittstelle bereitgestellt werden. Dies ermöglicht eine schnelle und rückwirkungsfreie Datenumrechnung und -umwandlung von Prozess-Informationen.

Bei einer weiteren Ausführungsform ist die Vorrichtung dazu eingerichtet, Ausgangsnachrichten mit unterschiedlichen Schichtstrukturen zu erzeugen mittels Durchlaufenlassen einer Informationseinheit durch einen der jeweiligen Schichtstruktur zugeordneten Protokollstapel von oben nach unten. Auf diese Weise kann die Vorrichtung ausgangsseitig verschiedene Protokolle bzw. Protokollstapel überstützen, wodurch die Flexibilität und Kompatibilität der Vorrichtung erhöht wird. Als Protokolle kommen zum Beispiel in Betracht: SMB, FTP, HTTP(S) für Dateien, OPC-UA, Feldbus-Protokolle für allgemeine Daten, RDP, VNC, SSH, Telnet für Desktop-Daten, zum Beispiel Bildschirminhalte.

Durch die zuvor beschriebene Ausführungsform werden auch für die Erzeugung der Ausgangsnachricht verschiedene Protokolle unterstützt.

Vorzugsweise ist die Vorrichtung dazu eingerichtet, für die erste und/oder zweite Schnittstelle ausschließlich verschlüsselte Protokolle zu verwenden. Insbesondere werden zur Gewährleistung der IT-Sicherheit für die Kommunikation auf der Seite einer globalen, zum Beispiel an das Internet angeschlossenen, Netzwerk-Infrastruktur, wie zum Beispiel dem ersten Kommunikationsnetzwerk, bei dem es sich insbesondere um ein IT-Kommunikationsnetzwerk handeln kann, vorzugsweise ausschließlich verschlüsselte Protokolle verwendet. Unverschlüsselte Dienste werden auf dieser Seite vorzugsweise vermieden bzw. deaktiviert.

Bei einer weiteren Ausführungsform umfasst das Verfahren weiter:
- Empfangen einer Rückrichtungs-Eingangsnachricht über die zweite Schnittstelle, wobei die Rückrichtungs-Eingangsnachricht eine dritte Schichtstruktur aufweist und eine der obersten Schicht der dritten Schichtstruktur zugeordnete Rückrichtungs-Informationseinheit enthält,
- Extrahieren der Rückrichtungs-Informationseinheit aus der Rückrichtungs-Eingangsnachricht mittels Durchlaufenlassen der Rückrichtungs-Eingangsnachricht durch einen der dritten Schichtstruktur zugeordneten Protokollstapel von unten nach oben,
- Prüfen der extrahierten Rückrichtungs- Informationseinheit zum Erhalt eines Rückrichtungs-Prüfungsergebnisses,
- Erzeugen einer Rückrichtungs-Ausgangsnachricht mittels Durchlaufenlassen der extrahierten Rückrichtungs-Informationseinheit oder einer auf Basis der extrahierten Rückrichtungs-Informationseinheit erzeugten Rückrichtungs-Informationseinheit durch einen einer vierten Schichtstruktur zugeordneten Protokollstapel von oben nach unten und
- Versenden der Rückrichtungs-Ausgangsnachricht über die erste Schnittstelle,
- wobei der Erhalt, insbesondere das Erzeugen, und/oder das Versenden der Rückrichtungs-Ausgangsnachricht abhängig vom Rückrichtungs-Prüfungsergebnis durchgeführt werden.

Bei einer entsprechenden Ausführungsform der Vorrichtung sind der mindestens eine Speicher und der Computerprogrammcode weiter dazu eingerichtet, mit dem mindestens einen Prozessor die Vorrichtung weiter dazu zu veranlassen, die zuvor genannten Verfahrensschritte durchzuführen.

Auf diese Weise wird eine sichere, asynchrone Kommunikation auch von der zweiten zur ersten Schnittstelle bzw. vom zweiten zum ersten Kommunikationsnetzwerk ermöglicht. Die dritte Schichtstruktur kann insbesondere der zweiten Schichtstruktur entsprechen und die vierte Schichtstruktur kann insbesondere der ersten Schichtstruktur entsprechen.

Bei einer weiteren Ausführungsform umfasst das Verfahren weiter:
- Erzeugen einer Informationseinheit auf Basis der extrahierten Informationseinheit.

Bei einer entsprechenden Ausführungsform der Vorrichtung sind der mindestens eine Speicher und der Computerprogrammcode weiter dazu eingerichtet, mit dem mindestens einen Prozessor die Vorrichtung weiter dazu zu veranlassen, den zuvor genannten Verfahrensschritt durchzuführen.

Indem eine Informationseinheit auf Basis der extrahierten Informationseinheit erzeugt und mit dieser erzeugten Informationseinheit die Ausgangsnachricht erzeugt wird, kann eine Aufbereitung der in der Informationseinheit enthaltenen Information, beispielsweise eine Aufbereitung von Prozessdaten, durchgeführt und die aufbereiteten Informationen an das zweite Kommunikationsnetzwerk gesendet werden. In der Vorrichtung kann also insbesondere bereits eine Verarbeitung der Informationseinheiten erfolgen, beispielsweise eine Formatierung, Konvertierung oder dergleichen.

Bei einer weiteren Ausführungsform ist das erste Kommunikationsnetzwerk und/oder das zweite Kommunikationsnetzwerk ein OT-Netzwerk. Die durch das Verfahren bzw. die Vorrichtung gewährleistete geprüfte und asynchrone Kommunikation ist insbesondere vorteilhaft für OT-Netzwerke, da diese wegen geringerer oder veralteter Sicherheitsarchitektur angreifbarer oder störungsanfälliger sein können. Besonders vorteilhaft ist der Einsatz des Verfahrens, der Vorrichtung oder des Systems, wenn eines der Kommunikationsnetzwerke, insbesondere das zweite Kommunikationsnetzwerk, ein OT-Netzwerk und ein anderes Kommunikationsnetzwerk, insbesondere das erste Kommunikationsnetzwerk, ein IT-Netzwerk ist. Durch die geprüfte asynchrone Kommunikation vom ersten zum zweiten Kommunikationsnetzwerk können Geräte, insbesondere Produktionsmaschinen, im OT-Netzwerk vor Angriffen aus dem IT-Netzwerk geschützt werden, insbesondere, wenn letztere mit dem Internet verbunden sind.

Bei einer weiteren Ausführungsform ist ein Gerät, insbesondere eine Produktionsmaschine, an das zweite Kommunikationsnetzwerk angeschlossen und das Prüfen der extrahierten Informationseinheit umfasst: Prüfen der extrahierten Informationseinheit auf Konformität mit einer vorgegebenen oder erhaltenen Datenkonformitätsanforderung für das Gerät. Auf diese Weise können vom ersten in das zweite Kommunikationsnetzwerk übermittelte Informationen spezifisch für das Gerät, insbesondere die Produktionsmaschine, im zweiten Kommunikationsnetzwerk überprüft werden, so dass dieses Gerät vor einer Störung oder gar Beschädigung durch falsche oder schädliche Informationseinheiten, wie zum Beispiel unzulässigen Steueranweisungen oder Parameterwerten außerhalb eines zulässigen Bereichs, geschützt werden kann.

Bei einer weiteren Ausführungsform ist die Vorrichtung weiter zur Prüfung und automatische Erkennung einer Kompromittierung auf Basis einer ungewöhnlichen Verhaltensweise der Maschinensteuerungsrechner sowie der ein- und ausgehenden Kommunikation, eingerichtet. Diese Prüfung einer Kompromittierung kann zum Beispiel Bestandteil des Prüfens der extrahierten Informationseinheit sein. Ungewöhnliche Verhaltensweisen können sein:
- mehrfach erfolglose Zugriffsversuche auf Maschinensteuerungsrechnern und/oder
- Abweichendes Systemverhalten bspw. anhand von Zustandsüberprüfung.

Bei einer weiteren Ausführungsform ist die Vorrichtung vorzugsweise dazu eingerichtet, Funktionen zur Sicherstellung der funktionalen Sicherheit nach ISO 26262 durchzuführen. Diese Funktionen können insbesondere durch Auswertung der extrahierten Informationseinheiten, insbesondere darin enthaltener Prozess-Informationen realisiert werden.

Bei einer weiteren Ausführungsform ist die Vorrichtung vorzugsweise dazu eingerichtet, auf Basis der Prozess-Informationen sowie optional weiterer Zusatzinformationen aus dem Vorgang des Extrahierens der Informationseinheit, zum Beispiel erhaltener Header-Informationen, Angriffe zu erkennen und vorzugsweise mittels Blockierung von Fremdsystemen abzuwehren. Auf diese Weise kann die Vorrichtung mit einem sogenannten Intrusion Detection System (IDS) und vorzugsweise mit einem sogenannten Intrusion Prevension System (IPS) ausgerüstet werden. Das Erkennen und/oder Abwehren von Angriffen kann insbesondere Bestandteil des Prüfens der extrahierten Informationseinheit sein.

Bei einer weiteren Ausführungsform ist die Vorrichtung dazu eingerichtet, Verbindungen aufzubauen, die eine Nutzerin oder einen Nutzer adressieren können, beispielsweise per E-Mail, Push-Benachrichtigung oder ähnliche Verfahren. Eine derartige Benachrichtigung von Nutzerinnen und Nutzern zum Beispiel kann genutzt werden, um
- Systemadministratoren über Netzwerkangriffe zu informieren und/oder
- Maschineninstandhalter über Fehlerverhalten ihrer Maschinen zu informieren. Eine solche Benachrichtigung kann insbesondere über die Erzeugung und/oder den Versand einer Ereignis-Ausgangsnachricht erfolgen.

Es kann vorgesehen sein, unterschiedliche Arten von Daten durch verschiedene Varianten der Prüfung, insbesondere Zugriffssteuerung, auf der Applikationsschicht separat zu adressieren. Zu diesem Zweck kann die Vorrichtung dazu eingerichtet sein, verschiedene Dienste für die Extraktion der Informationseinheit aus der Eingangsnachricht und/oder für die Erzeugung einer Ausgangsnachricht zur Verfügung zu stellen. Die verschiedenen Dienste können insbesondere dazu eingerichtet sein, Eingangs- und/oder Ausgangsnachrichten mit unterschiedlichen Schichtstrukturen und zugeordneten Protokollstapeln zu verarbeiten.

Beispielsweise können ein oder mehrere Dateitransfer-Dienste (wie SMB, FTP, HTTP) vorgesehen sein, mit denen Dateien von der Vorrichtung transferiert werden können. Die Extraktion der Informationseinheit, insbesondere einer oder mehrerer Dateien, ermöglicht die Bereitstellung bzw. Anbindung von Serverdiensten. Bei der Prüfung, insbesondere Zugriffssteuerung, auf der Applikationsschicht können zusätzlich zur Prüfung auf die Erfüllung von Datenkonformitätsanforderungen zum Beispiel auch eine Überprüfung auf Viren und sonstigen Schadprogramme durchgeführt werden. Die Erzeugung der Ausgangsnachricht kann wiederum mittels Dateitransfer-Diensten erfolgen. Die Übertragung von Dateien kann für jede Richtung (von der ersten zur zweiten und von der zweiten zur ersten Schnittstelle bzw. vom IT-Netzwerk zum OT-Netzwerk oder vom OT-Netzwerk zum IT-Netzwerk) mit individuellen Einstellungen betrieben werden.

Weiter können beispielsweise ein oder mehrere Datentransfer-Dienste, wie zum Beispiel für verschiedenste Protokolle und/oder Feldbus-Systeme, vorgesehen sein, wie zum Beispiel für eine Kommunikation mittels OPC-UA. Dadurch können beispielsweise beliebige Mess-, Prozess- und Steuerungsdaten von bzw. für Produktions- oder Industrieanlagen aufgenommen werden. Die Erzeugung der Ausgangsnachricht kann insbesondere eine Aufbereitung derartiger Daten umfassen. Dadurch ist es beispielsweise möglich, die Prozess-Informationen in einer zentralen Unternehmens-Datenbank abzulegen. Auf diese Weise können Daten von OT-Geräten durch die Vorrichtung geprüft und den überwachenden IT-Systemen bereitgestellt werden.

Weiter können beispielsweise ein oder mehrere Dienste für die Übertragung von Bildschirminhalten vorgesehen sein, die zum Beispiel eines oder mehrere der folgenden Protokolle unterstützen können: RDP, VNC, SSH, Telnet. Über einen solchen Dienst kann zum Beispiel eine Verbindung mit einer Steuerungssoftware, insbesondere eines OT-Systems im zweiten Kommunikationsnetzwerk, hergestellt werden. Beim Prüfen der extrahierten Informationseinheit wird vorzugsweise auf Basis eines Berechtigungskonzepts, beispielsweise unter Verwendung von Login-Daten, überprüft, welche Aktionen getätigt werden dürfen, insbesondere welche extrahierten Informationseinheiten zulässig sind oder nicht.

Die Erzeugung und der Versand von Ausgangsnachrichten kann beispielsweise durch die Bereitstellung einer Web-Oberfläche eines Webservers der Vorrichtung erfolgen, sodass sich ein Nutzer mittels eines Web-Browsers verbinden kann. Auf ähnliche Weise sind auch weitere spezifische Services beispielsweise für Video- und Audioinhalte realisierbar.

Bei einer Ausführungsform erfolgt auf der Vorrichtung ein Zwischenspeichern von Prozess-Informationen. Auf diese Weise kann insbesondere beim Einsatz der Vorrichtung mit Netzwerken, an die Systeme einer Produktions- oder Industrieanlage angeschlossen sind, erreicht werden, dass auch bei einem Ausfall der Netzwerk-Infrastruktur die durch die Anlage generierten Prozess-Informationen auf der Vorrichtung zwischengespeichert und nach der Wiederherstellung der Kommunikationsverbindung weiteren Produktions- und Industrieanlagen bereitgestellt werden können.

Durch die Vorrichtung kann eine Standardisierung der Schnittstelle zwischen Systemen von Produktions- und Industrieanlagen und der Informationstechnologie erreicht werden, da die in der Vorrichtung implementierte Logik die Daten der Anlagen analysieren und in einem definierten Format bereitstellen kann.

Die Vorrichtung reduziert zudem die Anzahl der erforderlichen Geräte, da anstelle zweier getrennter Geräte für ein Firewall-System und eine Konversion lediglich die Vorrichtung benötigt wird. Durch die in der Vorrichtung vorgenommene Prüfung auf der obersten Schicht, insbesondere Applikationsschicht, werden gegenüber einer Kombination aus Firewall und Konverter jedoch eine höhere Sicherheit und wesentlich weitreichendere Möglichkeiten ermöglicht, da zum Beispiel für die Prüfung der Informationseinheiten zum Beispiel auf bereitgestellte Prozess-Informationen zugegriffen werden kann. Demgegenüber ist mittels eines Firewall-System bisher lediglich die Einschränkung der Kommunikation auf zwingend notwendige Protokolle möglich.

Das System kann mehrere der zuvor beschriebenen Vorrichtungen oder Ausführungsformen davon aufweisen, die parallel zueinander betrieben werden. Auf diese Weise kann die Verfügbarkeit der Kommunikation zwischen dem ersten und zweiten Kommunikationsnetzwerk erhöht werden, so dass zum Beispiel Hochverfügbarkeitsanforderungen eingehalten werden können.

Um die Verfügbarkeit zu verbessern, kann die Vorrichtung insbesondere dazu eingerichtet sein, eine Kommunikationsverbindung zu übernehmen, wenn eine dazu parallel eingesetzte Vorrichtung ausfällt. Zu diesem Zweck ist die Vorrichtung insbesondere dazu eingerichtet, mit weiteren parallel dazu eingesetzten Vorrichtungen als Gesamtverbund zu agieren, insbesondere Informationen über die Verfügbarkeit der parallel eingesetzten Vorrichtungen zu erhalten.

Weitere Vorteile und Merkmale der Vorrichtung, des Systems und des Verfahrens ergeben sich aus der nachfolgenden Beschreibung von Ausführungsbeispielen, wobei auf die beigefügte Zeichnung Bezug genommen wird.

In der Zeichnung zeigen
- Fig. 1: eine Netzwerksystem aus dem Stand der Technik,
- Fig. 2a-c: ein Ausführungsbeispiel des Verfahrens,
- Fig. 3: ein Ausführungsbeispiel der Vorrichtung,
- Fig. 4: weitere Ausführungsbeispiele der Vorrichtung und des Verfahrens und
- Fig. 5: ein Ausführungsbeispiel des Systems.

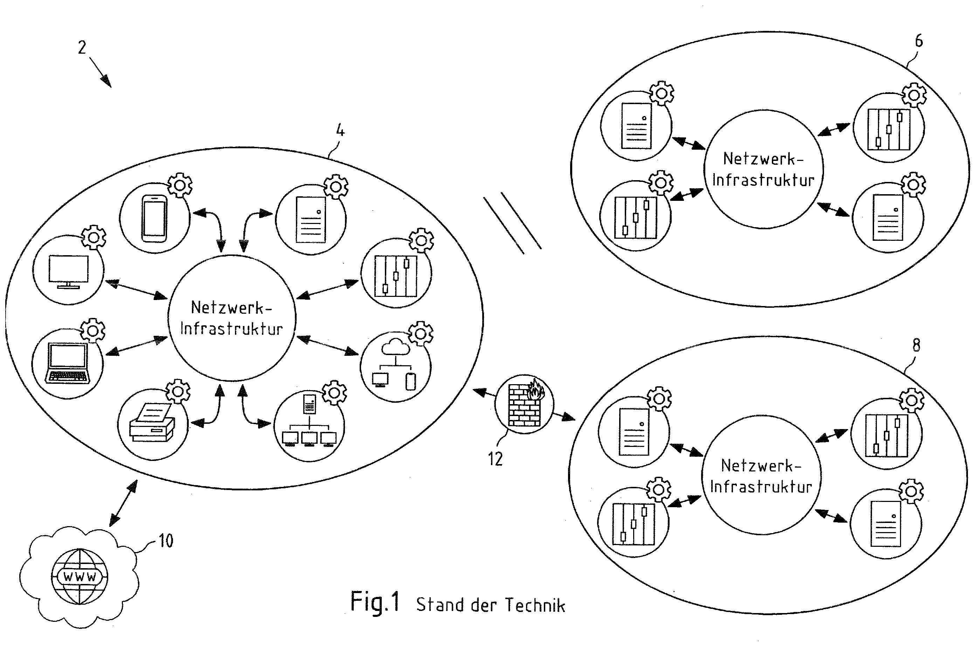

Fig. 1 zeigt in schematischer Darstellung ein Netzwerksystem aus dem Stand der Technik. Das Netzwerksystem 2 umfasst ein IT-Netzwerk 4, ein erstes OT-Netzwerk 6 und ein zweites OT-Netzwerk 8. Bei dem IT-Netzwerk 4 handelt es sich um das interne Bürokommunikationsnetzwerk eines Unternehmens, das zum Beispiel an das Internet 10 angeschlossen sein kann. Bei dem ersten und zweiten OT-Netzwerk 6, 8 handelt es sich jeweils um Kommunikationsnetzwerke, über das verschiedene Produktionsmaschinen miteinander verbunden sind.

In der Vergangenheit wurden IT- und OT-Netzwerke, wie das IT-Netzwerk 4 und das OT-Netzwerk 6, häufig voneinander getrennt, so dass es keine Kommunikationsverbindung zwischen den beiden Netzwerken gab. Dies war unter anderem erforderlich, da OT-Netzwerke 6 häufig eigene, zum Teil proprietäre Netzwerkprotokolle verwendeten, die zu dem typischerweise Ethernet-basierten IT-Netzwerk nicht direkt kompatibel waren. Die Netztrennung zwischen IT- und OT-Netzwerk führte zwar zu einer hohen Sicherheit, da ein Eindringen in das OT-Netzwerk über das IT-Netzwerk nicht möglich war, machte das System jedoch gleichzeitig unflexibel, da es jeden automatischen Datenaustausch zwischen OT- und IT-Netzwerk unterband, so dass zum Beispiel eine zentrale Steuerung oder Überwachung über das IT-Netzwerk nicht möglich war.

Insbesondere mit dem zunehmenden Einsatz der Ethernet-Technik für OT-Netzwerke und der zunehmenden Digitalisierung, werden die einst vollständig isoliert betriebenen OT-Systeme einer Produktions- oder Industrieanlage nun zunehmend in die globalen Netzwerk-Infrastrukturen der IT-Systeme integriert, wie es in Fig. 1 für das OT-Netzwerk 8 dargestellt ist, das mit dem IT-Netzwerk 4 verbunden ist.

Durch die Integration der Systeme in die Netzwerk-Infrastrukturen verändert sich aufgrund der oftmals eingesetzten veralteten Soft- und Hardware die Gefährdungslage hinsichtlich einer Beeinträchtigung des sicheren und kontinuierlichen Betriebs sowie der Gewährleistung der definierten Schutzziele signifikant. Primär kann die Veränderung der Gefährdungslage durch das Zusammentreffen einer veralteten Soft- oder Hardware mit bereits bekannten Schwachstellen und der Vielzahl von mit dem Internet verbundenen heterogenen Systemen, welche eine potentielle Gefährdung für die OT-Systeme darstellen, begründet werden. Durch die Integration der einst isoliert betrieben OT-Systeme entsteht für die betreibende Organisation somit ein umfangreiches Risiko.

Eine Minimierung des Risikos durch die ganzheitliche Aktualisierung der eingesetzten Soft- und Hardware und damit einhergehend die Behebung der bekannten Schwachstellen ist allerdings aufgrund des oftmals hohen Alters der Produktions- und Industrieanlagen oder der Einschränkungen durch den Hersteller nicht möglich, sodass zum aktuellen Zeitpunkt nur die Möglichkeit besteht, die Systeme mit Hilfe eines Firewall-Systems 12 in der globalen Netzwerk-Infrastruktur zu isolieren oder diese wieder - wie das OT-Netzwerk 6 - vollständig physikalisch zu trennen. In jedem Fall werden die Möglichkeiten hinsichtlich einer Optimierung der betrieblichen Produktionsprozesse eingeschränkt und die Wahrnehmung der entstehenden Chancen erschwert.

Der Stand der Technik hinsichtlich der Absicherung von OT-Systemen, welche in die globalen Netzwerk-Infrastrukturen der IT-Systeme integriert wurden, basiert demnach primär auf der logischen Trennung durch den Einsatz von Firewall-Systemen 12, sodass ein Betrieb der OT-Systeme einer Produktions- oder Industrieanlage in einem dedizierten Segment ermöglicht wird. Durch die Integration der Produktions- oder Industrieanlagen in die Netzwerk-Infrastruktur der IT-Systeme wird allerdings nicht in jedem Fall ein Datenaustausch (z. B. Prozessdaten, Qualitätsdaten und Energiedaten) ermöglicht, da unterschiedliche Hard- und Softwareversionen sowie nicht kompatible proprietären Protokolle eingesetzt werden. Um die Problematik zu lösen werden vermehrt Konverter eingesetzt, welche proprietären OT-Protokolle konvertieren und die Kommunikationsfähigkeit mit IT-Systemen ermöglichen. Derartige Konverter lösen jedoch die Sicherheitsproblematik für OT-Netzwerke nicht zufriedenstellend.

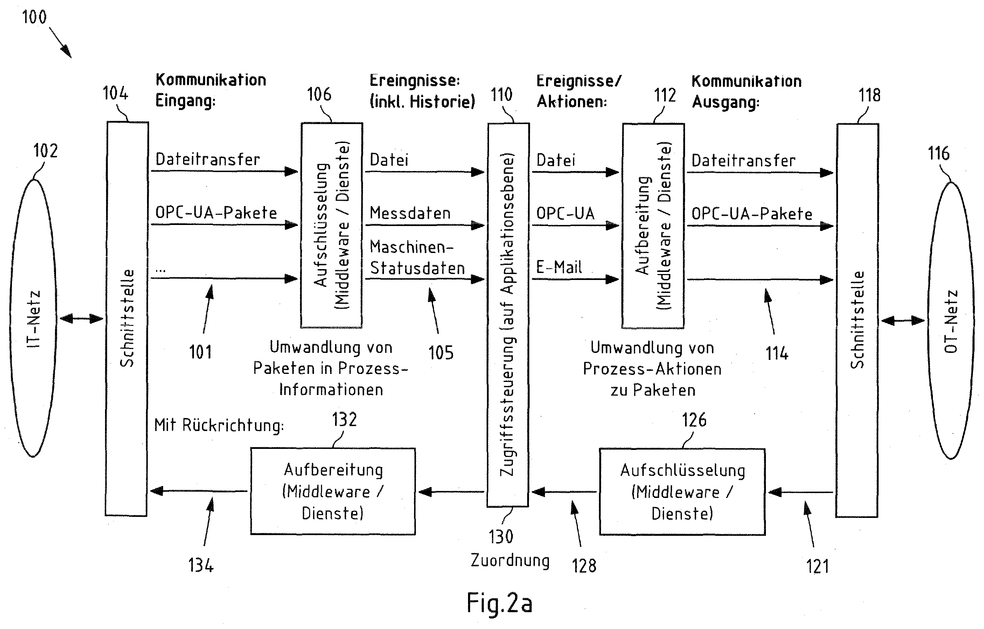

Die Fig. 2a-c zeigen in schematischer Darstellung ein Ausführungsbeispiel des Verfahrens gemäß der vorliegenden Offenbarung.

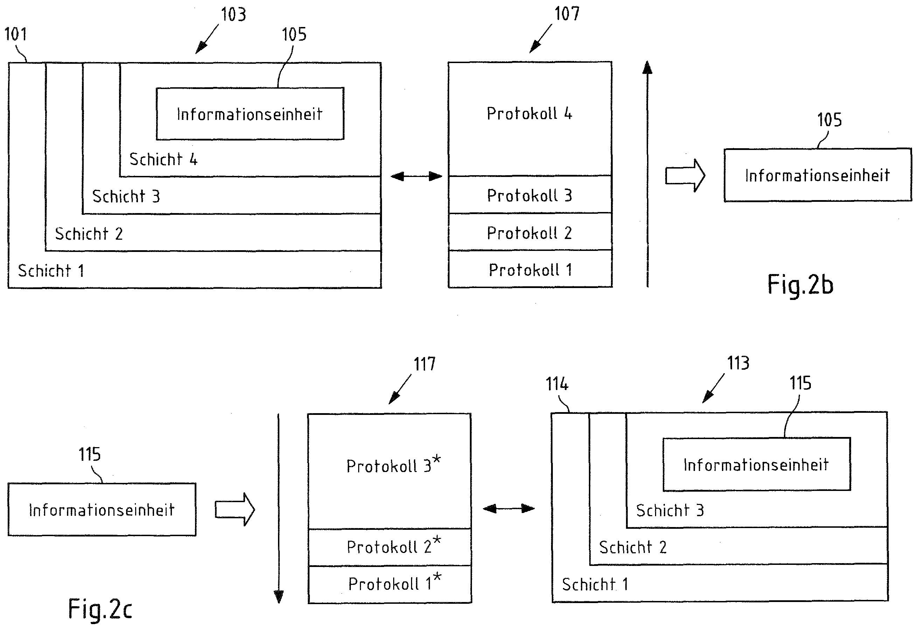

Bei dem Verfahren 100 (s. Fig. 2a) wird zunächst eine Eingangsnachricht 101 über eine mit einem ersten Kommunikationsnetzwerk 102 verbundene erste Schnittstelle 104 empfangen. Die Eingangsnachricht 101 weist eine erste Schichtstruktur 103 auf, die in Fig. 2b exemplarisch mit vier Schichten dargestellt ist. Die Eingangsnachricht 101 enthält eine der obersten Schicht ("Schicht 4" in Fig. 2b) der ersten Schichtstruktur 103 zugeordnete Informationseinheit 105. Die Eingangsnachricht 101 kann zum Beispiel eine Schichtstruktur für einen Dateitransfer, zum Beispiel FTP in einem TCP/IP-Protokollstapel, oder eine Schichtstruktur gemäß dem OPC Unified Architecture (OPC UA) Standard aufweisen.

Bei der Informationseinheit 105 kann es sich zum Beispiel um Prozess-Informationen, insbesondere um Mess- und/oder Steuerdaten, Maschinen-Statusdaten, Dateien (zum Beispiel CNC-Programme oder Software-Updates), Video- und/oder Audio-Streams (zum Beispiel von Prozessüberwachungskameras) oder um Bildschirminhalte (zum Beispiel von Steuerbildschirmen einer OT-Hardware) handeln.

Die empfangene Eingangsnachricht 101 wird sodann aufgeschlüsselt (Schritt 106), um die Informationseinheit 105 aus der Eingangsnachricht 101 zu extrahieren. Hierzu wird im Schritt 106 ein der ersten Schichtstruktur 105 zugeordneter Protokollstapel 107 von unten nach oben durchlaufen, so dass die jeweiligen Protokolle von der untersten Schicht bis zur obersten Schicht (insbesondere Applikationsschicht) verarbeitet werden und schließlich die der obersten Schicht zugeordnete Informationseinheit 105, d.h. die reine Information, insbesondere Prozess-Information, erhalten wird.

Bei dem in Fig. 2b dargestellten Beispiel wird die Eingangsnachricht 101 beim Durchlaufen des Protokollstapels 107 von unten nach oben zum Beispiel zunächst gemäß "Protokoll 1" des Protokollstapels 107 verarbeitet, um die "Schicht 1" zu verarbeiten, sodann gemäß "Protokoll 2" des Protokollstapels 107 verarbeitet, um die "Schicht 2" zu verarbeiten, sodann gemäß "Protokoll 3" des Protokollstapels 107 verarbeitet, um die "Schicht 3" zu verarbeiten und schließlich gemäß "Protokoll 4" des Protokollstapels 107 verarbeitet, um die "Schicht 4" zu verarbeiten und damit die dieser "Schicht 4", die vorliegend die oberste Schicht der Schichtstruktur darstellt, zugeordnete Informationseinheit 105 zu extrahieren.

Bei der extrahierten Informationseinheit 105 kann es sich beispielsweise um eine Datei, um Messdaten, um Maschinen-Statusdaten, um Steuerdaten oder dergleichen handeln.

Im nächsten Schritt 110 wird die extrahierte Informationseinheit 105 geprüft, um ein Prüfungsergebnis zu erhalten. Handelt es sich bei der Informationseinheit zum Beispiel um eine Datei, so kann bei der Prüfung zum Beispiel ein Virenscan der Datei durchgeführt werden, dessen Ergebnis das Prüfungsergebnis darstellt. Handelt es sich bei der Informationseinheit zum Beispiel um Messdaten oder Maschinen-Statusdaten, so kann bei der Prüfung zum Beispiel geprüft werden, ob diese innerhalb eines vorgegebenen, zulässigen Wertebereichs liegen oder das richtige Format aufweisen. Handelt es sich bei der Informationseinheit 105 zum Beispiel um Steuerbefehle, so kann zum Beispiel anhand einer Blacklist oder Whitelist überprüft werden, ob die Steuerbefehle zulässig sind.

Wenn das Prüfungsergebnis positiv ist, d.h. zum Beispiel die Datei keinen Virus enthält, die Messdaten oder Maschinen-Statusdaten innerhalb zulässiger Bereiche liegen bzw. richtig formatiert sind bzw. die Steuerbefehle zulässig sind, wird im nächsten Schritt 112 eine Ausgangsnachricht 114 erzeugt, indem die extrahierte Informationseinheit von oben nach unten durch einen einer zweiten Schichtstruktur 113 zugeordneten Protokollstapel 117 durchlaufen gelassen wird, so dass die jeweiligen Protokolle von der obersten Schicht (insbesondere Applikationsschicht) bis zur untersten Schicht verarbeitet werden und schließlich die fertig kodierte Ausgangsnachricht erhalten wird.

Alternativ kann die extrahierte Informationseinheit 105 auch zunächst noch verarbeitet werden, beispielsweise umformatiert, konvertiert oder dergleichen, und dann mit der durch diese Verarbeitung erhaltene Informationseinheit die Ausgangsnachricht erzeugt werden.

Fig. 2c zeigt schematisch die Erzeugung der Ausgangsnachricht 114 aus einer Informationseinheit 115, bei der es sich um die extrahierte Informationseinheit 105 oder um eine auf Basis der extrahierten Informationseinheit 105 erhaltene Informationseinheit handeln kann. Die Informationseinheit 115 durchläuft den zweiten Protokollstapel 117 von oben nach unten, wobei die Informationseinheit 115 zum Beispiel zunächst gemäß "Protokoll 3*" verarbeitet wird, um die Informationseinheit 115 in die oberste Schicht der Schichtstruktur 113 ("Schicht 3") einzubetten, die sodann gemäß "Protokoll 2*" verarbeitet wird, um die in die "Schicht 3" eingebettete Informationseinheit 115 weiter in die "Schicht 2" einzubetten, und sodann gemäß "Protokoll 1*" verarbeitet wird zur Einbettung in die "Schicht 1", wodurch die Ausgangsnachricht 113 erzeugt wird.

Die zweite Schichtstruktur 117 weist in diesem Beispiel eine andere Anzahl von Schichten auf als die erste Schichtstruktur 107, nämlich beispielhaft drei Schichten. Die Anzahl der Schichten der ersten und zweiten Schichtstruktur 107, 117 können auch übereinstimmen. Weiterhin unterscheiden sich die in den Protokollstapeln 107 und 117 verwendeten Protokolle voneinander. Es können in den Protokollstapeln 107 und 117 aber auch gleiche Protokolle verwendet werden.

Die erzeugte Ausgangsnachricht 114 wird dann, wiederum bei positivem Prüfungsergebnis, über eine mit einem zweiten Kommunikationsnetzwerk 116 verbundene zweite Schnittstelle 118 versandt (s. Fig. 2a).

Auf diese Weise wird eine geprüfte und asynchrone Kommunikationsverbindung zwischen dem ersten Kommunikationsnetzwerk 102, bei dem es sich zum Beispiel um ein IT-Netzwerk handeln kann, und dem zweiten Kommunikationsnetzwerk 116, bei dem es sich insbesondere um ein OT-Netzwerk handeln kann, bereitgestellt. Insbesondere kann durch dieses Verfahren verhindert werden, dass Informationseinheiten mit unzulässigem Inhalt oder Schadcode vom ersten Kommunikationsnetzwerk 102, das beispielsweise mit dem Internet verbunden sein kann, in das zweite Kommunikationsnetzwerk 116 gelangen und dort die angeschlossenen Produktionsmaschinen stören oder beschädigen.

Bei dem Verfahren kann auch eine Kommunikationsverbindung von dem zweiten Kommunikationsnetzwerk 116 zu dem Kommunikationsnetzwerk 102 erfolgen. Diese Kommunikation in Rückrichtung kann analog zu der oben beschriebenen geprüften, asynchronen Kommunikation erfolgen, bei der über die zweite Schnittstelle 118 eine Eingangsnachricht 121 empfangen wird, in Schritt 126 die der obersten Ebene der Schichtstruktur der Eingangsnachricht 121 zugeordnete Informationseinheit 128 extrahiert wird, diese in Schritt 130 geprüft wird und abhängig vom Prüfungsergebnis in Schritt 132 eine Ausgangsnachricht 134 erzeugt und über die erste Schnittstelle 104 versandt wird. Alternativ kann in Rückrichtung aber auch eine herkömmliche, direkte Kommunikationsverbindung vorgesehen sein.

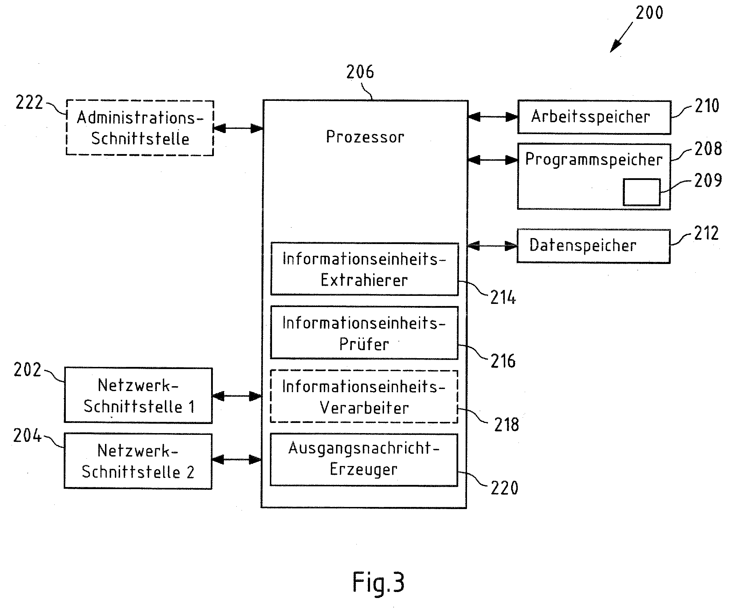

Fig. 3 zeigt in schematischer Darstellung ein Ausführungsbeispiel der Vorrichtung gemäß der vorliegenden Offenbarung. Die Vorrichtung 200 umfasst eine erste Schnittstelle 202 zu Kommunikation mit einem ersten Kommunikationsnetzwerk, eine zweite Schnittstelle 204 zur Kommunikation mit einem vom ersten Kommunikationsnetzwerk separaten zweiten Kommunikationsnetzwerk, mindestens einen Prozessor 206, einen Programmspeicher 208 mit Computerprogrammcode 209 sowie vorzugsweise weiter einen Arbeitsspeicher 210 und einen Datenspeicher 212.

Der auf dem Programmspeicher 208 gespeicherte Computerprogrammcode 209 ist dazu eingerichtet, mit dem mindestens einen Prozessor 206 die Vorrichtung 200 dazu zu veranlassen, das in Fig. 2 dargestellte Verfahren 100 durchzuführen.

Zu diesem Zweck kann der Prozessor 206, zum Beispiel als funktionale oder strukturelle Einheit, einen Informationseinheit-Extrahierer 214 aufweisen, der insbesondere dazu eingerichtet sein kann, aus einer über die erste Schnittstelle 202 empfangenen Eingangsnachricht eine der obersten Schicht einer ersten Schichtstruktur der Eingangsnachricht zugeordnete Informationseinheit zu extrahieren, indem die Eingangsnachricht durch einen der ersten Schichtstruktur zugeordneten Protokollstapel von unten nach oben durchlaufen wird.

Weiterhin kann der Prozessor 206, zum Beispiel als funktionale oder strukturelle Einheit, einen Informationseinheit-Prüfer 216 aufweisen, der insbesondere dazu eingerichtet sein kann, eine von dem Informationseinheit-Extrahierer 214 extrahierte Informationseinheit zu prüfen, um ein Prüfungsergebnis zu erhalten. Die Prüfung kann insbesondere anhand von Datenkonformitätsanforderungen erfolgen, die der Informationseinheit-Prüfer 216 beispielsweise aus dem Datenspeicher 212 abrufen kann.

Weiterhin kann der Prozessor 206, zum Beispiel als funktionale oder strukturelle Einheit, einen optionalen Informationseinheits-Verarbeiter 218 aufweisen, der insbesondere dazu eingerichtet sein kann, auf Basis einer von dem Informationseinheit-Extrahierer 214 extrahierten Informationseinheit eine Informationseinheit zu erzeugen, zum Beispiel, wenn ein vom Informationseinheit-Prüfer 216 erhaltenes Prüfungsergebnis positiv ist.

Weiterhin kann der Prozessor 206, zum Beispiel als funktionale oder strukturelle Einheit, einen Ausgangsnachricht-Erzeuger 220 aufweisen, der insbesondere dazu eingerichtet sein kann, aus einer vom Informationseinheit-Extrahierer 214 extrahierten Informationseinheit oder aus einer vom Informationseinheits-Verarbeiter 218 erzeugten Informationseinheit eine Ausgangsnachricht zu erzeugen indem ein einer zweiten Schichtstruktur zugeordneter Protokollstapel von oben nacl unten durchlaufen wird.

Die Vorrichtung 200 kann weiterhin eine Administrations-Schnittstelle 222, zum Beispiel eine Nutzerschnittstelle, aufweisen, über die die Vorrichtung konfiguriert bzw. administriert werden kann. Beispielsweise können über die Administrations-Schnittstelle 222 Vorgaben für die vom Informationseinheits-Prüfer 216 durchzuführende Prüfung konfiguriert werden, zum Beispiel indem für die Prüfung vorgegebene Datenkonformitätsanforderungen auf dem Datenspeicher 212 abgelegt werden.

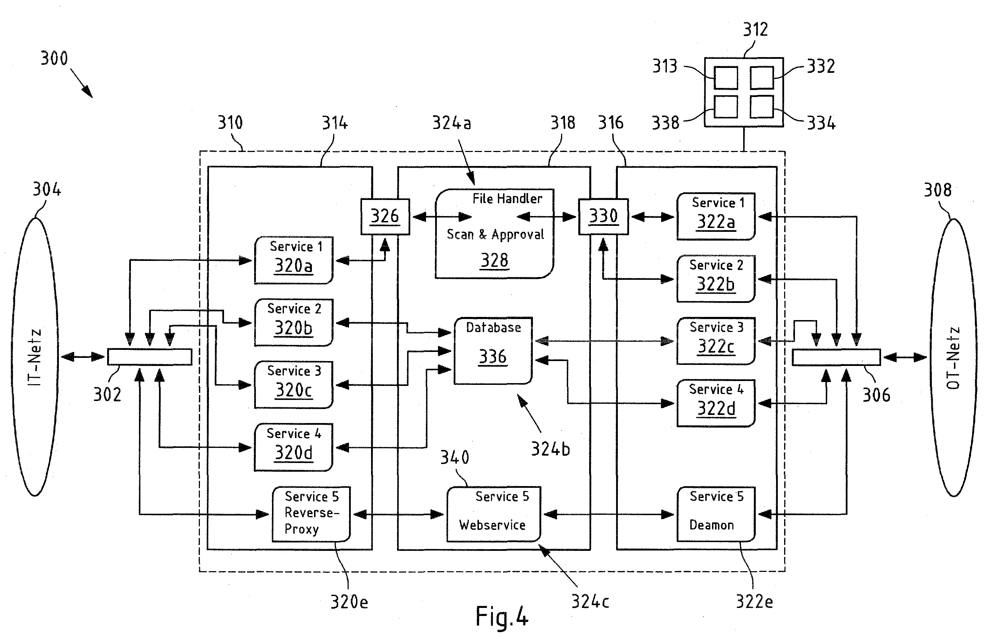

Fig. 4 zeigt in schematischer Darstellung weitere Ausführungsbeispiele der Vorrichtung und des Verfahrens gemäß der vorliegenden Offenbarung.

Die Vorrichtung 300 umfasst eine erste Schnittstelle 302 zur Kommunikation mit einem ersten Kommunikationsnetzwerk 304, eine zweite Schnittstelle 306 zur Kommunikation mit einem vom ersten Kommunikationsnetzwerk 304 separaten zweiten Kommunikationsnetzwerk 308, einen Prozessor 310 sowie einen Speicher 312 mit Computerprogrammcode 313.

Der Speicher 312 und der Computerprogrammcode 313 sind dazu eingerichtet, mit dem Prozessor 310 die Vorrichtung zu veranlassen, folgende Schritte (a) bis (e) durchzuführen:
(a) Empfangen einer Eingangsnachricht über die erste Schnittstelle 302, wobei die Eingangsnachricht eine erste Schichtstruktur aufweist und eine der obersten Schicht der ersten Schichtstruktur zugeordnete Informationseinheit enthält.
(b) Extrahieren der Informationseinheit aus der Eingangsnachricht mittels Durchlaufenlassen der Eingangsnachricht durch einen der ersten Schichtstruktur zugeordneten Protokollstapel von unten nach oben.
(c) Prüfen der extrahierten Informationseinheit zum Erhalt eines Prüfungsergebnisses.
(d) Erzeugen einer Ausgangsnachricht mittels Durchlaufenlassen der extrahierten Informationseinheit oder einer auf Basis der extrahierten Informationseinheit erzeugten Informationseinheit durch einen einer zweiten Schichtstruktur zugeordneten Protokollstapel von oben nach unten.
(e) Versenden der Ausgangsnachricht über die zweite Schnittstelle 306.

Zur Durchführung der Schritte (a) bis (e) kann der Prozessor 310, zum Beispiel als funktionale oder strukturelle Einheiten, eine erste Aufschlüsselungs-/AufbereitungsEinheit 314, eine zweite Aufschlüsselungs-/Aufbereitungs-Einheit 316 sowie eine Prüfeinheit 318 aufweisen.

Die erste Aufschlüsselungs-/Aufbereitungs-Einheit 314 stellt verschiedene Dienste 320a-e zur Verfügung, die zum Beispiel dazu eingerichtet sind, über die erste Schnittstelle 302 empfangene Eingangsnachrichten mit unterschiedlichen Schichtstrukturen und zugeordneten Protokollstapeln zu verarbeiten, um eine der obersten Schicht der Schichtstruktur der Eingangsnachricht zugeordnete Informationseinheit zu extrahieren und an die Prüfeinheit 318 weiterzuleiten. Darüber hinaus können die Dienste 320a-e dazu eingerichtet sein, Ausgangsnachrichten mit unterschiedlichen Schichtstrukturen und zugeordneten Protokollstapeln aus von der Prüfeinheit 318 erhaltenen Informationseinheiten zu erzeugen und über die erste Schnittstelle 302 zu versenden.

Beispielsweise können die Dienste 320a und 320b zur Entschlüsselung von Eingangsnachrichten und/oder zur Erzeugung von Ausgangsnachrichten mit einer FTP/TCP/IP-Schichtstruktur, der Dienst 320c zur Entschlüsselung von Eingangsnachrichten und/oder zur Erzeugung von Ausgangsnachrichten mit einer OPC-UA/TCP/IP-Schichtstruktur und die Dienste 320d und 320e zur Entschlüsselung von Eingangsnachrichten und/oder zur Erzeugung von Ausgangsnachrichten mit einer HTTP/TCP/IP-Schichtstruktur eingerichtet sein.

Die zweite Aufschlüsselungs-/Aufbereitungs-Einheit 316 stellt verschiedene Dienste 322a-e zur Verfügung, die zum Beispiel dazu eingerichtet sind, über die zweite Schnittstelle 306 empfangene Eingangsnachrichten mit unterschiedlichen Schichtstrukturen und zugeordneten Protokollstapeln zu verarbeiten, um eine der obersten Schicht der Schichtstruktur der Eingangsnachricht zugeordnete Informationseinheit zu extrahieren und an die Prüfeinheit 318 weiterzuleiten. Darüber hinaus können die Dienste 322a-e dazu eingerichtet sein, Ausgangsnachrichten mit unterschiedlichen Schichtstrukturen und zugeordneten Protokollstapeln aus von der Prüfeinheit 318 erhaltenen Informationseinheiten zu erzeugen und über die zweite Schnittstelle 306 zu versenden.

Beispielsweise können die Dienste 322a und 322c zur Entschlüsselung von Eingangsnachrichten und/oder zur Erzeugung von Ausgangsnachrichten mit einer OPC-UA/TCP/IP-Schichtstruktur, der Dienst 322b zur Entschlüsselung von Eingangsnachrichten und/oder zur Erzeugung von Ausgangsnachrichten mit einer FTP/TCP/IP-Schichtstruktur, der Dienst 322d zur Entschlüsselung von Eingangsnachrichten und/oder zur Erzeugung von Ausgangsnachrichten mit einer proprietären OT-Schichtstruktur und der Dienst 320e zur Entschlüsselung von Eingangsnachrichten und/oder zur Erzeugung von Ausgangsnachrichten mit einer HTTP/TCP/IP-Schichtstruktur eingerichtet sein etc.

Die Prüfeinheit 318 stellt verschiedene Prüfdienste 324a-c zur Verfügung.

Die Prüfdienste 324a-c können zum Beispiel dazu eingerichtet sein, eine von der ersten Aufschlüsselungs-/Aufbereitungs-Einheit 314 erhaltene Informationseinheit zu prüfen, um ein Prüfungsergebnis zu erhalten, und die Informationseinheit abhängig vom Prüfungsergebnis an die zweite Aufschlüsselungs-/Aufbereitungs-Einheit 316 weiterzuleiten. Die Prüfeinheit 318 kann weiter dazu eingerichtet sein, auf Basis der von der ersten Aufschlüsselungs-/Aufbereitungs-Einheit 314 erhaltenen Informationseinheit eine Informationseinheit zu erzeugen und diese abhängig vom Prüfungsergebnis an die zweite Aufschlüsselungs-/Aufbereitungs-Einheit 316 weiterzuleiten.

Die Prüfdienste 324a-c können zum Beispiel auch dazu eingerichtet sein, eine von der zweiten Aufschlüsselungs-/Aufbereitungs-Einheit 316 erhaltene Informationseinheit zu prüfen, um ein Prüfungsergebnis zu erhalten, und die Informationseinheit abhängig vom Prüfungsergebnis an die erste Aufschlüsselungs-/Aufbereitungs-Einheit 314 weiterzuleiten. Die Prüfeinheit 318 kann weiter dazu eingerichtet sein, auf Basis der von der zweiten Aufschlüsselungs-/Aufbereitungs-Einheit 316 erhaltenen Informationseinheit eine Informationseinheit zu erzeugen und diese abhängig vom Prüfungsergebnis an die zweite Aufschlüsselungs-/Aufbereitungs-Einheit 314 weiterzuleiten.

Der erste Prüfdienst 324a umfasst ein erstes Zwischenspeichermodul 326, ein Prüfmodul 328 und ein zweites Zwischenspeichermodul 330.

Das erste Zwischenspeichermodul 326 ist dazu eingerichtet, eine von der ersten Aufschlüsselungs-/Aufbereitungs-Einheit 316 erhaltene Informationseinheit auf einem ersten Datenspeicher 332 zwischenzuspeichern. Bei dem ersten Datenspeicher 332 kann es sich zum Beispiel um einen vorgegebenen Speicherbereich im Speicher 312 handeln.

Das Prüfmodul 328 ist dazu eingerichtet, eine auf dem ersten Datenspeicher 332 zwischengespeicherte Informationseinheit zu überprüfen, beispielsweise auf Schadcode zu scannen oder die Konformität der Informationseinheit mit vorgegebenen Datenkonformitätsanforderungen zu überprüfen, und das zweite Zwischenspeichermodul 330 zu veranlassen, die Informationseinheit bei positivem Prüfungsergebnis (kein Schadcode; konform) auf einem zweiten Datenspeicher 334 zwischenzuspeichern. Bei dem zweiten Datenspeicher 334 kann es sich zum Beispiel um einen weiteren vorgegebenen Speicherbereich im Speicher 312 handeln.

Das zweite Zwischenspeichermodul 330 ist weiterhin dazu eingerichtet, eine im zweiten Datenspeicher 334 zwischengespeicherte Informationseinheit an die zweite Aufschlüsselungs-/Aufbereitungs-Einheit 314 weiterzuleiten, zum Beispiel bei Erhalt einer entsprechenden Anfrage über die zweite Schnittstelle 306.

Der zweite Prüfdienst 324b umfasst ein Datenbankzugriffsmodul 336, das zum Beispiel dazu eingerichtet ist, eine von der ersten Aufschlüsselungs-/AufbereitungsEinheit 314 erhaltene Informationseinheit auf Konformität mit einer Datenbankstruktur einer Datenbank 338 zu prüfen, die beispielsweise im Speicher 312 gespeichert sein kann. Beispielsweise kann das Datenbankzugriffsmodul 336 überprüfen, ob die Informationseinheit ein datenbankkonformes Format, zum Beispiel Zahlenformat, aufweist. Das Datenbankzugriffsmodul 336 ist weiter zum Beispiel dazu eingerichtet, die Informationseinheit bei positivem Prüfungsergebnis (Informationseinheit ist datenbankkonform) in der Datenbank 338 zu speichern.

Das Datenbankzugriffsmodul 336 ist weiterhin dazu eingerichtet, eine in der Datenbank 338 gespeicherte Informationseinheit an die zweite Aufschlüsselungs-/Aufbereitungs-Einheit 314 weiterzuleiten, zum Beispiel bei Erhalt einer entsprechenden Anfrage über die zweite Schnittstelle 306.

Der dritte Prüfdienst 324c umfasst ein Webservicemodul 340, das zum Beispiel dazu eingerichtet ist, eine von der zweiten Aufschlüsselungs-/Aufbereitungs-Einheit 316 erhaltene Informationseinheit zu prüfen und bei positivem Prüfungsergebnis an die erste Aufschlüsselungs-/Aufbereitungs-Einheit 314 weiterzuleiten.

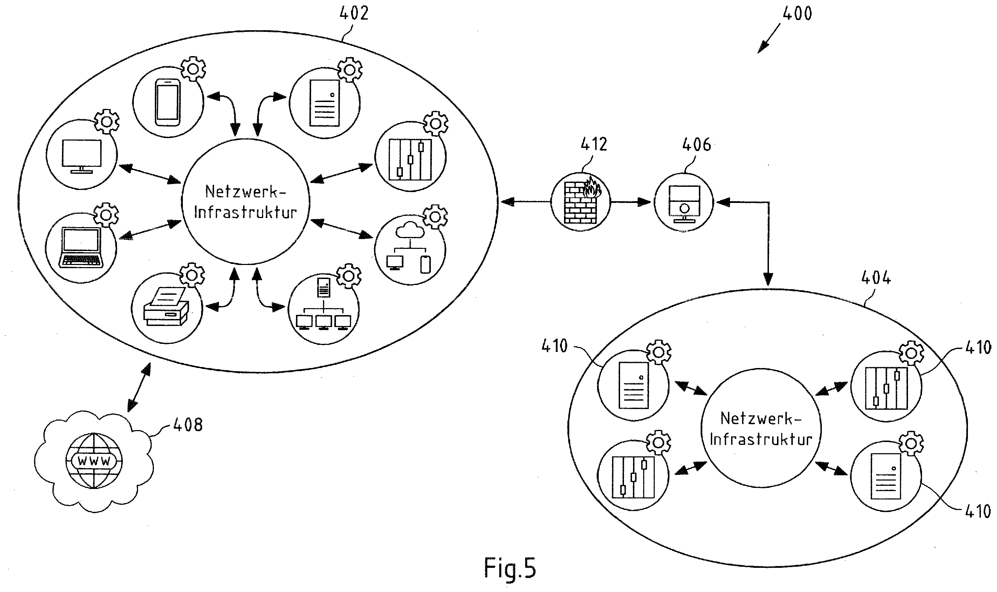

Fig. 5 zeigt in schematischer Darstellung ein Ausführungsbeispiel des Systems gemäß der vorliegenden Offenbarung.

Das System 400 umfasst ein erstes Kommunikationsnetzwerk 402, ein zweites Kommunikationsnetzwerk 404 und eine Vorrichtung 406, die wie die Vorrichtung 200 aus Fig. 3 oder wie die Vorrichtung 300 aus Fig. 4 ausgestaltet sein kann.

Bei dem ersten Kommunikationsnetzwerk 402 kann es sich zum Beispiel um ein IT-Kommunikationsnetzwerk handeln, das mit dem Internet 408 verbunden sein kann. Bei dem zweiten Kommunikationsnetzwerk 402 kann es sich zum Beispiel um ein OT-Kommunikationsnetzwerk handeln, an das verschiedene Produktionsmaschinen 410 angeschlossen sind.

Das erste und das zweite Kommunikationsnetzwerk 402, 404 sind separat voneinander. Kommunikation zwischen dem ersten und dem zweiten Kommunikationsnetzwerk 402, 404 ist lediglich über die Vorrichtung 406 möglich, wobei das erste Kommunikationsnetzwerk 402 an die erste Schnittstelle und das zweite Kommunikationsnetzwerk 404 an die zweite Schnittstelle der Vorrichtung 406 angeschlossen sind.

Durch die über die Vorrichtung 406 erzielte, geprüfte und asynchrone Kommunikation zwischen dem ersten und zweiten Kommunikationsnetzwerk 402, 404 können Sicherheitsrisiken insbesondere für das OT-Kommunikationsnetzwerk 402 und die daran angeschlossenen Produktionsmaschinen 410 minimiert werden. Insbesondere können mit der Vorrichtung 406 Cyberangriffe aus dem IT-Kommunikationsnetzwerk 402 in das OT-Kommunikationsnetzwerk 404 unterbunden werden, da die Vorrichtung 406 direkte Kommunikationsverbindungen zwischen Teilnehmern beider Netzwerke unterbindet und stattdessen lediglich asynchrone und voneinander getrennte Kommunikationsverbindungen zur Vorrichtung 406 mit einer Prüfung übermittelter Daten auf der obersten Schicht, insbesondere Applikationsschicht erlaubt.

Zu diesem Zweck kann die Vorrichtung 406 zum Beispiel einen "digitalen Zwilling" einer oder mehrerer der Produktionsmaschinen 410 abbilden, indem in der Vorrichtung 406 Informationen über den aktuellen Betriebszustand der Produktionsmaschinen 410 gespeichert werden, so dass die Überprüfung der vom IT-Netzwerk 402 in das OT-Netzwerk 404 zu übermittelnden Daten abhängig vom aktuellen Betriebszustand der jeweiligen Produktionsmaschine 410 erfolgen kann.

Durch die Vorrichtung 406 können zum Beispiel Dateien und betriebliche Daten auf sichere Weise zwischen den Kommunikationsnetzwerken 402, 404 übertragen werden. Weiterhin erlaubt die Vorrichtung 406 auch einen sicheren Fernzugriff aus dem IT-Netzwerk 402 auf die Produktionsmaschinen 410, insbesondere, wenn vom IT-Netzwerk 402 gesandte Steuerbefehle oder -parameter durch die Vorrichtung 406 anhand eines "digitalen Zwillings" der betreffenden Produktionsmaschine auf deren Zulässigkeit überprüft werden.

Zur weiteren Absicherung kann zusätzlich zur Vorrichtung 406 zum Beispiel noch eine weitere Firewall 412 vorgesehen sein, die zum Beispiel Cyberangriffe auf die Vorrichtung 406 selbst unterbindet. Zusätzlich oder alternativ kann eine Firewall direkt in die Vorrichtung 406 integriert sein.

Folgende Ausführungsformen sollen ebenfalls als offenbart gelten:

### Ausführungsform 1:

Ein Verfahren nach Anspruch 16, durchgeführt durch mindestens eine Vorrichtung, insbesondere die zuvor beschriebene Vorrichtung oder eine Ausführungsform davon, umfassend mindestens folgende Schritte:
- Empfangen einer Eingangsnachricht über eine mit einem ersten Kommunikationsnetzwerk verbundene erste Schnittstelle, wobei die Eingangsnachricht eine erste Schichtstruktur aufweist und eine der obersten Schicht der ersten Schichtstruktur zugeordnete Informationseinheit enthält,
- Extrahieren der Informationseinheit aus der Eingangsnachricht mittels Durchlaufenlassen der Eingangsnachricht durch einen der ersten Schichtstruktur zugeordneten Protokollstapel von unten nach oben,
- Prüfen der extrahierten Informationseinheit zum Erhalt eines Prüfungsergebnisses,
- Zwischenspeichern der Informationseinheit oder einer auf Basis der extrahierten Informationseinheit erzeugten Informationseinheit abhängig vom Prüfungsergebnis auf einem Datenspeicher,
- Erzeugen einer Ausgangsnachricht mittels Durchlaufenlassen der zwischengespeicherten Informationseinheit oder einer auf Basis der zwischengespeicherten Informationseinheit erzeugten Informationseinheit durch einen einer zweiten Schichtstruktur zugeordneten Protokollstapel von oben nach unten,
- Erhalten einer Informationsanfrage über die zweite Schnittstelle und
- Versenden der Ausgangsnachricht über eine mit einem vom ersten Kommunikationsnetzwerk separaten zweiten Kommunikationsnetzwerk verbundene zweite Schnittstelle,
- wobei das Erzeugen und/oder das Versenden der Ausgangsnachricht abhängig vom Prüfungsergebnis durchgeführt werden und
- wobei das Versenden der Ausgangsnachricht als Reaktion auf den Erhalt der Informationsanfrage durchgeführt wird.

### Ausführungsform 2:

Das Verfahren nach Ausführungsform 1, wobei das Erzeugen und/oder das Versenden der Ausgangsnachricht nur bei positivem Prüfungsergebnis durchgeführt werden.

### Ausführungsform 3:

Das Verfahren nach Ausführungsform 1 oder 2, wobei das Prüfen der extrahierten Informationseinheit umfasst:
- Prüfen der extrahierten Informationseinheit auf Schadcode.

### Ausführungsform 4:

Das Verfahren nach einer der Ausführungsformen 1 bis 3, wobei das Prüfen der extrahierten Informationseinheit umfasst:
- Prüfen der extrahierten Informationseinheit auf Übereinstimmung mit einem Eintrag in einer vorgegebenen Liste von zulässigen Informationseinheiten und/oder in einer vorgegebenen Liste von unzulässigen Informationseinheiten.

### Ausführungsform 5:

Das Verfahren nach einer der Ausführungsformen 1 bis 4, wobei das Prüfen der extrahierten Informationseinheit umfasst:
- Prüfen der extrahierten Informationseinheit auf Konformität mit einer oder mehreren vorgegebenen Datenkonformitätsanforderungen, insbesondere für ein an das zweite Kommunikationsnetzwerk anschließbares Gerät.

### Ausführungsform 6:

Das Verfahren nach einer der Ausführungsformen 1 bis 5, wobei das Prüfen der extrahierten Informationseinheit umfasst:
- Empfangen einer aktuellen Datenkonformitätsanforderungsinformation über die zweite Schnittstelle und
- Prüfen der extrahierten Informationseinheit auf Konformität mit einer der empfangenen aktuellen Datenkonformitätsanforderungsinformation zugeordneten Datentkonformitätsanforderung.

### Ausführungsform 7:

Das Verfahren nach einer der Ausführungsformen 1 bis 6, wobei das Zwischenspeichern der extrahierten Informationseinheit oder der auf Basis der extrahierten Informationseinheit erzeugten Informationseinheit auf dem Datenspeicher in einer Datenbankstruktur erfolgt.

### Ausführungsform 8:

Das Verfahren nach einer der Ausführungsformen 1 bis 7, weiter umfassend:
- Speichern der extrahierten Informationseinheit auf einem ersten Datenspeicher,
wobei das Prüfen der extrahierten Informationseinheit umfasst:
- Prüfen der auf dem ersten Datenspeicher gespeicherten Informationseinheit zum Erhalt eines Prüfungsergebnisses,
wobei das Verfahren weiter umfasst:
- Speichern der extrahierten Informationseinheit oder einer auf Basis der extrahierten Informationseinheit erzeugten Informationseinheit abhängig vom Prüfungsergebnis auf einem zweiten Datenspeicher.

### Ausführungsform 9:

Das Verfahren nach einer der Ausführungsformen 1 bis 8, weiter umfassend:
- Empfangen einer Rückrichtungs-Eingangsnachricht über die zweite Schnittstelle, wobei die Rückrichtungs-Eingangsnachricht eine dritte Schichtstruktur aufweist und eine der obersten Schicht der dritten Schichtstruktur zugeordnete Rückrichtungs-Informationseinheit enthält,
- Extrahieren der Rückrichtungs-Informationseinheit aus der Rückrichtungs-Eingangsnachricht mittels Durchlaufenlassen der Rückrichtungs-Eingangsnachricht durch einen der dritten Schichtstruktur zugeordneten Protokollstapel von unten nach oben,
- Prüfen der extrahierten Rückrichtungs- Informationseinheit zum Erhalt eines Rückrichtungs-Prüfungsergebnisses,
- Erzeugen einer Rückrichtungs-Ausgangsnachricht mittels Durchlaufenlassen der extrahierten Rückrichtungs-Informationseinheit oder einer auf Basis der extrahierten Rückrichtungs-Informationseinheit erzeugten Rückrichtungs-Informationseinheit durch einen einer vierten Schichtstruktur zugeordneten Protokollstapel von oben nach unten und
- Versenden der Rückrichtungs-Ausgangsnachricht über die erste Schnittstelle,
- wobei der Erhalt, insbesondere das Erzeugen, und/oder das Versenden der Rückrichtungs-Ausgangsnachricht abhängig vom Rückrichtungs-Prüfungsergebnis durchgeführt werden.

### Ausführungsform 10:

Das Verfahren nach einer der Ausführungsformen 1 bis 9, weiter umfassend:
- Erzeugen einer Informationseinheit auf Basis der extrahierten Informationseinheit.

## Patentansprüche

1. Vorrichtung (200, 300, 406), umfassend:
- eine erste Schnittstelle (104, 202, 302) zur Kommunikation mit einem ersten Kommunikationsnetzwerk (102, 304, 402),
- eine zweite Schnittstelle (118, 204, 306) zur Kommunikation mit einem vom ersten Kommunikationsnetzwerk (102, 304, 402) separaten zweiten Kommunikationsnetzwerk (116, 308, 404),
- mindestens einen Prozessor (206, 310),
- mindestens einen Speicher (208, 312) mit Computerprogrammcode (209, 313) und
- mindestens einen Datenspeicher (212, 312, 332, 334, 338),
- wobei der mindestens eine Speicher (208, 312) und der Computerprogrammcode (209, 313) dazu eingerichtet sind, mit dem mindestens einen Prozessor (206, 310) die Vorrichtung (200, 300, 406) zu veranlassen, mindestens Folgendes durchzuführen:
- Empfangen einer Eingangsnachricht (101) über die erste Schnittstelle (104, 202, 302), wobei die Eingangsnachricht (101) eine erste Schichtstruktur (103) aufweist und eine der obersten Schicht der ersten Schichtstruktur (103) zugeordnete Informationseinheit (105) enthält,
- Extrahieren der Informationseinheit (105) aus der Eingangsnachricht (101) mittels Durchlaufenlassen der Eingangsnachricht (101) durch einen der ersten Schichtstruktur (103) zugeordneten Protokollstapel (107) von unten nach oben,
- Prüfen der extrahierten Informationseinheit (105) zum Erhalt eines Prüfungsergebnisses,
- Zwischenspeichern der Informationseinheit (105, 115) oder einer auf Basis der extrahierten Informationseinheit (115) erzeugten Informationseinheit abhängig vom Prüfungsergebnis auf dem Datenspeicher (212, 332, 334, 338),
- Erzeugen einer Ausgangsnachricht (114) mittels Durchlaufenlassen der zwischengespeicherten Informationseinheit (105, 115) oder einer auf Basis der zwischengespeicherten Informationseinheit erzeugten Informationseinheit (115) durch einen einer zweiten Schichtstruktur (113) zugeordneten Protokollstapel (117) von oben nach unten,
- Erhalten einer Informationsanfrage über die zweite Schnittstelle (118, 204, 306) und
- Versenden der Ausgangsnachricht (114) über die zweite Schnittstelle (118, 204, 306),
- wobei das Erzeugen und/oder das Versenden der Ausgangsnachricht (114) abhängig vom Prüfungsergebnis durchgeführt werden und
- wobei das Versenden der Ausgangsnachricht (114) als Reaktion auf den Erhalt der Informationsanfrage durchgeführt wird.

2. Vorrichtung nach Anspruch 1,
wobei das Erzeugen und/oder das Versenden der Ausgangsnachricht (114) nur bei positivem Prüfungsergebnis durchgeführt werden.

3. Vorrichtung nach Anspruch 1 oder 2,
wobei das Prüfen der extrahierten Informationseinheit (105) umfasst:
- Prüfen der extrahierten Informationseinheit (105) auf Schadcode.

4. Vorrichtung nach einem der Ansprüche 1 bis 3,
wobei das Prüfen der extrahierten Informationseinheit (105) umfasst:
- Prüfen der extrahierten Informationseinheit (105) auf Übereinstimmung mit einem Eintrag in einer vorgegebenen Liste von zulässigen Informationseinheiten und/oder in einer vorgegebenen Liste von unzulässigen Informationseinheiten.

5. Vorrichtung nach einem der Ansprüche 1 bis 4,
- wobei das Prüfen der extrahierten Informationseinheit (105) umfasst:
- Prüfen der extrahierten Informationseinheit (105) auf Konformität mit einer oder mehreren vorgegebenen Datenkonformitätsanforderungen, insbesondere für ein an das zweite Kommunikationsnetzwerk (116, 308, 404) anschließbares Gerät.

6. Vorrichtung nach einem der Ansprüche 1 bis 5,
- wobei das Prüfen der extrahierten Informationseinheit (105) umfasst:
- Empfangen einer aktuellen Datenkonformitätsanforderungsinformation über die zweite Schnittstelle (118, 204, 306) und
- Prüfen der extrahierten Informationseinheit (105) auf Konformität mit einer der empfangenen aktuellen Datenkonformitätsanforderungsinformation zugeordneten Datenkonformitätsanforderung.

7. Vorrichtung nach einem der Ansprüche 1 bis 6,
**dadurch gekennzeichnet, dass** der Datenspeicher (312, 338) eine Datenbankstruktur aufweist und das Zwischenspeichern der extrahierten Informationseinheit (105, 115) oder der auf Basis der extrahierten Informationseinheit (115) erzeugten Informationseinheit auf dem Datenspeicher (312, 338) in der Datenbankstruktur erfolgt.

8. Vorrichtung nach einem der Ansprüche 1 bis 7,
- weiter aufweisend einen ersten Datenspeicher (332) und einen zweiten Datenspeicher (334),
- wobei die Vorrichtung (200, 300, 406) weiter dazu veranlasst wird, die extrahierte Informationseinheit (105) auf dem ersten Datenspeicher (332) zu speichern,
- wobei das Prüfen der extrahierten Informationseinheit (105) umfasst:
- Prüfen der auf dem ersten Datenspeicher (332) gespeicherten Informationseinheit (105) zum Erhalt eines Prüfungsergebnisses,
- wobei die Vorrichtung (200, 300, 406) weiter dazu veranlasst wird, die extrahierte Informationseinheit (105, 115) oder eine auf Basis der extrahierten Informationseinheit erzeugte Informationseinheit (115) abhängig vom Prüfungsergebnis auf dem zweiten Datenspeicher (334) zu speichern.

9. Vorrichtung nach einem der Ansprüche 1 bis 8,
wobei die Vorrichtung (200, 300, 406) dazu eingerichtet ist, Informationseinheiten (105) aus Eingangsnachrichten (101, 121) mit unterschiedlichen Schichtstrukturen zu extrahieren mittels Durchlaufenlassen der jeweiligen Eingangsnachricht (101, 121) durch einen der jeweiligen Schichtstruktur (103) zugeordneten Protokollstapel (107) von unten nach oben.

10. Vorrichtung nach einem der Ansprüche 1 bis 9,
wobei die Vorrichtung (200, 300, 406) dazu eingerichtet ist, Ausgangsnachrichten (114, 134) mit unterschiedlichen Schichtstrukturen (103, 113) zu erzeugen mittels Durchlaufenlassen einer Informationseinheit (105. 115) durch einen der jeweiligen Schichtstruktur (103, 113) zugeordneten Protokollstapel (107, 117) von oben nach unten.

11. Vorrichtung nach einem der Ansprüche 1 bis 10,
- wobei die Vorrichtung (200, 300, 406) weiter veranlasst wird, Folgendes durchzuführen:
- Empfangen einer Rückrichtungs-Eingangsnachricht (121) über die zweite Schnittstelle (118., 204, 306), wobei die Rückrichtungs-Eingangsnachricht (121) eine dritte Schichtstruktur (103, 113) aufweist und eine der obersten Schicht der dritten Schichtstruktur (103, 113) zugeordnete Rückrichtungs-Informationseinheit enthält,
- Extrahieren der Rückrichtungs-Informationseinheit aus der Rückrichtungs-Eingangsnachricht (121) mittels Durchlaufenlassen der Rückrichtungs-Eingangsnachricht (121) durch einen der dritten Schichtstruktur (103, 113) zugeordneten Protokollstapel (107, 117) von unten nach oben,
- Prüfen der extrahierten Rückrichtungs-Informationseinheit zum Erhalt eines Rückrichtungs-Prüfungsergebnisses,
- Erzeugen einer Rückrichtungs-Ausgangsnachricht (134) mittels Durchlaufenlassen der extrahierten Rückrichtungs-Informationseinheit oder einer auf Basis der extrahierten Rückrichtungs-Informationseinheit erzeugten Rückrichtungs-Informationseinheit durch einen einer vierten Schichtstruktur zugeordneten Protokollstapel von oben nach unten und
- Versenden der Rückrichtungs-Ausgangsnachricht (134) über die erste Schnittstelle (104, 202, 302),
- wobei das Erzeugen und/oder das Versenden der Rückrichtungs-Ausgangsnachricht (134) abhängig vom Rückrichtungs-Prüfungsergebnis durchgeführt werden.

12. Vorrichtung nach einem der Ansprüche 1 bis 11,
wobei die Vorrichtung weiter veranlasst wird, Folgendes durchzuführen:
- Erzeugen einer Informationseinheit (115) auf Basis der extrahierten Informationseinheit (105).

13. System (400),
- mit einem ersten Kommunikationsnetzwerk (102, 304, 402),
- mit einem vom ersten Kommunikationsnetzwerk (102, 304, 402) separaten zweiten Kommunikationsnetzwerk (116, 308, 404) und
- mit einer Vorrichtung (200, 300, 406) nach einem der Ansprüche 1 bis 12,
- wobei die erste Schnittstelle (104, 202, 302) mit dem ersten Kommunikationsnetzwerk (102, 304, 402) verbunden ist und die zweite Schnittstelle (118, 204, 306) mit dem zweiten Kommunikationsnetzwerk (116, 308, 404) verbunden ist.

14. System nach Anspruch 13, wobei das erste Kommunikationsnetzwerk (102, 304, 402) und/oder das zweite Kommunikationsnetzwerk (116, 308, 404) ein OT-Netzwerk ist.

15. System nach Anspruch 13 oder 14,
- wobei ein Gerät (410), insbesondere eine Produktionsmaschine, an das zweite Kommunikationsnetzwerk (116, 308, 404) angeschlossen ist und
- wobei das Prüfen der extrahierten Informationseinheit (105) umfasst:
- Prüfen der extrahierten Informationseinheit (105) auf Konformität mit einer vorgegebenen oder erhaltenen Datenkonformitätsanforderung für das Gerät (410).

16. Verfahren (100), durchgeführt durch mindestens eine Vorrichtung, insbesondere eine Vorrichtung (200, 300, 406) nach einem der Ansprüche 1 bis 12, umfassend mindestens folgende Schritte:
- Empfangen einer Eingangsnachricht (101) über eine mit einem ersten Kommunikationsnetzwerk (102, 304, 402) verbundene erste Schnittstelle (104, 202, 302), wobei die Eingangsnachricht (101) eine erste Schichtstruktur (103) aufweist und eine der obersten Schicht der ersten Schichtstruktur (103) zugeordnete Informationseinheit (105) enthält,
- Extrahieren der Informationseinheit (105) aus der Eingangsnachricht (101) mittels Durchlaufenlassen der Eingangsnachricht (101) durch einen der ersten Schichtstruktur (103) zugeordneten Protokollstapel (107) von unten nach oben,
- Prüfen der extrahierten Informationseinheit (105) zum Erhalt eines Prüfungsergebnisses,
- Zwischenspeichern der Informationseinheit (105, 115) oder einer auf Basis der extrahierten Informationseinheit (115) erzeugten Informationseinheit abhängig vom Prüfungsergebnis auf einem Datenspeicher (212, 332, 334, 338),
- Erzeugen einer Ausgangsnachricht (114) mittels Durchlaufenlassen der zwischengespeicherten Informationseinheit (105, 115) oder einer auf Basis der zwischengespeicherten Informationseinheit (105, 115) erzeugten Informationseinheit (115) durch einen einer zweiten Schichtstruktur (113) zugeordneten Protokollstapel (117) von oben nach unten,
- Erhalten einer Informationsanfrage über die zweite Schnittstelle (118, 204, 306) und
- Versenden der Ausgangsnachricht (114) über eine mit einem vom ersten Kommunikationsnetzwerk (102, 304, 402) separaten zweiten Kommunikationsnetzwerk (116, 308, 404) verbundene zweite Schnittstelle (118, 204, 306),
- wobei das Erzeugen und/oder das Versenden der Ausgangsnachricht (114) abhängig vom Prüfungsergebnis durchgeführt werden und
- wobei das Versenden der Ausgangsnachricht (114) als Reaktion auf den Erhalt der Informationsanfrage durchgeführt wird.

17. Computerprogrammcode (209, 313), der, wenn er auf einer Vorrichtung (200, 300, 406) nach einem der Ansprüche 1 bis 12 ausgeführt wird, die Vorrichtung veranlasst, das Verfahren nach Anspruch 16 durchzuführen.

## Claims

1. Apparatus (200, 300, 406) comprising:
- a first interface (104, 202, 302) for communicating with a first communication network (102, 304, 402),
- a second interface (118, 204, 306) for communicating with a second communication network (116, 308, 404) separate from the first communication network (102, 304, 402),
- at least one processor (206, 310),
- at least one memory (208, 312) containing computer program code (209, 313), and
- at least one data memory (212, 312, 332, 334, 338),
- wherein the at least one memory (208, 312) and the computer program code (209, 313) are configured to cause, with the at least one processor (206, 310), the device (200, 300, 406) to perform at least the following:
- receiving an input message (101) via the first interface (104, 202, 302), the input message (101) having a first layer structure (103) and containing an information piece (105) associated with the top layer of the first layer structure (103),
- extracting the information piece (105) from the input message (101) by passing the input message (101) through a protocol stack (107) associated with the first layer structure (103) from bottom to top,
- examining the extracted information piece (105) to obtain an examination result,
- buffering the information piece (105, 115) or an information piece generated based on the extracted information piece (115) on the data memory (212, 332, 334, 338) as a function of the examination result,
- generating an output message (114) by passing the buffered information piece (105, 115) or an information piece (115) generated on the basis of the buffered information piece through a protocol stack (117) associated with a second layer structure (113) from top to bottom;
- obtaining an information request via the second interface (118, 204, 306) and
- sending the output message (114) via the second interface (118, 204, 306),
- wherein the generating and/or the sending of the output message (114) are performed as a function of the examination result and
- wherein the sending of the output message (114) is performed in response to the obtaining of the information request.

2. Apparatus according to claim 1,
wherein the generating and/or the sending of the output message (114) is performed only in case of a positive examination result.

3. Apparatus according to claim 1 or 2,
wherein the examining of the extracted information piece (105) comprises:
- examining the extracted information piece (105) for malicious code.

4. Apparatus according to any one of claims 1 to 3,
wherein the examining of the extracted information piece (105) comprises:
- examining the extracted information piece (105) for correspondence with an entry in a predetermined list of allowed information pieces and/or in a predetermined list of disallowed information pieces.

5. Apparatus according to any one of claims 1 to 4,
- wherein the examining of the extracted information piece (105) comprises:
- examining the extracted information piece (105) for conformance to one or more predetermined data conformance requirements, in particular for a device connectable to the second communication network (116, 308, 404).

6. Apparatus according to any one of claims 1 to 5,
- wherein the examining of the extracted information piece (105) comprises:
- receiving a current data conformance requirement information via the second interface (118, 204, 306); and
- examining the extracted information piece (105) for conformance with a data conformance requirement associated with the received current data conformance requirement information.

7. Apparatus according to any one of claims 1 to 6,
**characterized in that** the data memory (312, 338) has a database structure and the buffering of the extracted information piece (105, 115) or of the information piece generated on the basis of the extracted information piece (115) on the data memory (312, 338) is performed in the database structure.

8. Apparatus according to any one of claims 1 to 7,
- further comprising a first data memory (332) and a second data memory (334),
- wherein the apparatus (200, 300, 406) is further caused to store the extracted information piece (105) on the first data memory (332),
- wherein the examining of the extracted information piece (105) comprises:
- examining the information piece (105) stored on the first data memory device (332) to obtain an examination result,
- wherein the apparatus (200, 300, 406) is further caused to store the extracted information piece (105, 115) or an information piece (115) generated based on the extracted information piece on the second data memory (334) as a function of the examination result.

9. Apparatus according to any one of claims 1 to 8,
wherein the apparatus (200, 300, 406) is configured to extract information pieces (105) from input messages (101, 121) having different layer structures by passing the respective input message (101, 121) through a protocol stack (107) associated with the respective layer structure (103) from bottom to top.

10. Apparatus according to any one of claims 1 to 9,
wherein the apparatus (200, 300, 406) is configured to generate output messages (114, 134) having different layer structures (103, 113) by means of passing an information piece (105. 115) through a protocol stack (107, 117) associated with the respective layer structure (103, 113) from top to bottom.

11. Apparatus according to any one of claims 1 to 10,
- wherein the apparatus (200, 300, 406) is further caused to perform the following:
- receiving a reverse direction input message (121) via the second interface (118., 204, 306), wherein the reverse direction input message (121) has a third layer structure (103, 113) and contains a reverse direction information piece associated with the top layer of the third layer structure (103, 113),
- extracting the reverse direction information piece from the reverse direction input message (121) by passing the reverse direction input message (121) through a protocol stack (107, 117) associated with the third layer structure (103, 113) from bottom to top,
- examining the extracted reverse direction information piece to obtain a reverse direction examination result,
- generating a reverse direction output message (134) by passing the extracted reverse direction information piece or a reverse direction information piece generated based on the extracted reverse direction information piece through a protocol stack associated with a fourth layer structure from top to bottom; and
- sending the reverse direction output message (134) via the first interface (104, 202, 302),
- wherein the generating and/or the sending of the reverse direction output message (134) is performed as a function of the reverse direction examination result.

12. Apparatus according to any one of claims 1 to 11,
wherein the apparatus is further caused to perform the following:
- generating an information piece (115) based on the extracted information piece (105).

13. System (400),
- with a first communication network (102, 304, 402),
- with a second communication network (116, 308, 404) separate from the first communication network (102, 304, 402); and
- with an apparatus (200, 300, 406) according to any one of claims 1 to 12,
- wherein the first interface (104, 202, 302) is connected to the first communication network (102, 304, 402) and the second interface (118, 204, 306) is connected to the second communication network (116, 308, 404).

14. System according to claim 13, wherein the first communication network (102, 304, 402) and/or the second communication network (116, 308, 404) is an OT network.

15. System according to claim 13 or 14,
- wherein a device (410), in particular a production machine, is connected to the second communication network (116, 308, 404), and
- wherein the examining of the extracted information piece (105) comprises:
- examining the extracted information piece (105) for conformance to a predetermined or obtained data conformance requirement for the device (410).

16. Method (100), performed by at least one apparatus, in particular an apparatus (200, 300, 406) according to any one of claims 1 to 12, the method comprising at least the following steps:
- receiving an input message (101) via a first interface (104, 202, 302) connected to a first communication network (102, 304, 402), wherein the input message (101) has a first layer structure (103) and contains an information piece (105) associated with the top layer of the first layer structure (103),
- extracting the information piece (105) from the input message (101) by passing the input message (101) through a protocol stack (107) associated with the first layer structure (103) from bottom to top,
- examining the extracted information piece (105) to obtain an examination result,
- buffering the information piece (105, 115) or an information piece generated based on the extracted information piece (115) on the data memory (212, 332, 334, 338) as a function of the examination result,
- generating an output message (114) by passing the buffered information piece (105, 115) or an information piece (115) generated based on the buffered information piece (105, 115) through a protocol stack (117) associated with a second layer structure (113) from top to bottom,
- obtaining an information request via the second interface (118, 204, 306) and
- sending the output message (114) via a second interface (118, 204, 306) connected to a second communication network (116, 308, 404) separate from the first communication network (102, 304, 402),
- wherein the generating and/or the sending of the output message (114) are performed as a function of the examination result and
- wherein the sending of the output message (114) is performed in response to the obtaining of the information request.

17. Computer program code (209, 313), which, when executed on an apparatus according to one of claims 1 to 12, causes the apparatus to carry out the method according to claim 16.

## Revendications

1. Dispositif (200, 300, 406), comprenant :
- une première interface (104, 202, 302) pour communiquer avec un premier réseau de communication (102, 304, 402),
- une deuxième interface (118, 204, 306) pour communiquer avec un deuxième réseau de communication (116, 308, 404) séparé du premier réseau de communication (102, 304, 402),
- au moins un processeur (206, 310),
- au moins une mémoire (208, 312) contenant du code de programme informatique (209, 313), et
- au moins une mémoire de données (212, 312, 332, 334, 338),
- dans lequel ladite au moins une mémoire (208, 312) et ledit code de programme informatique (209, 313) sont adaptés pour, avec ledit au moins un processeur (206, 310), amener ledit dispositif (200, 300, 406) à effectuer au moins ce qui suit:
- recevoir un message d'entrée (101) via la première interface (104, 202, 302), le message d'entrée (101) ayant une première structure en couches (103) et contenant une unité d'information (105) associée à la couche la plus haute de la première structure en couches (103),
- extraire l'unité d'information (105) du message d'entrée (101) en faisant passer le message d'entrée (101) de bas en haut à travers une pile de protocoles (107) associée à la première structure en couches (103),
- vérifier l'unité d'information extraite (105) pour obtenir un résultat de vérification,
- mémoriser temporairement l'unité d'information (105, 115) ou une unité d'information générée sur la base de l'unité d'information extraite (115) en fonction du résultat de vérification dans la mémoire de données (212, 332, 334, 338),
- générer un message de sortie (114) en faisant passer l'unité d'information mémorisée temporairement (105, 115) ou une unité d'information (115) générée sur la base de l'unité d'information mémorisée temporairement à travers une pile de protocoles (117) associée à une deuxième structure en couches (113) de haut en bas,
- recevoir une demande d'informations via la deuxième interface (118, 204, 306), et
- envoyer le message de sortie (114) via la deuxième interface (118, 204, 306),
- la génération et/ou l'envoi du message de sortie (114) étant effectués en fonction du résultat de vérification, et
- dans lequel l'envoi du message de sortie (114) est effectué en réponse à la réception de la demande d'informations.

2. Dispositif selon la revendication 1,
dans lequel la génération et/ou l'envoi du message de sortie (114) ne sont effectués que si le résultat de vérification est positif.

3. Dispositif selon la revendication 1 ou 2,
dans lequel la vérification de l'unité d'information extraite (105) comprend :
- vérifier que l'unité d'information extraite (105) ne contient pas de code malveillant.

4. Dispositif selon l'une quelconque des revendications 1 à 3,
dans lequel la vérification de l'unité d'information extraite (105) comprend :
- vérifier que l'unité d'information extraite (105) correspond à une entrée dans une liste prédéterminée d'unités d'information admissibles et/ou dans une liste prédéterminée d'unités d'information non admissibles.

5. Dispositif selon l'une quelconque des revendications 1 à 4,
- dans lequel la vérification de l'unité d'information extraite (105) comprend :
- vérifier la conformité de l'unité d'information extraite (105) avec une ou plusieurs exigences de conformité de données prédéterminées, en particulier pour un dispositif pouvant être connecté au second réseau de communication (116, 308, 404).

6. Dispositif selon l'une quelconque des revendications 1 à 5,
- dans lequel la vérification de l'unité d'information extraite (105) comprend :
- la réception d'une information de demande de conformité de données actuelle via la deuxième interface (118, 204, 306), et
- vérifier la conformité de l'unité d'information extraite (105) avec une demande de conformité de données associée à l'information de demande de conformité de données courante reçue.

7. Dispositif selon l'une des revendications 1 à 6,
**caractérisé en ce que** la mémoire de données (312, 338) comprend une structure de base de données et le mémorisation temporaire de l'unité d'information extraite (105, 115) ou de l'unité d'information générée sur la base de l'unité d'information extraite (115) sur la mémoire de données (312, 338) est effectué dans la structure de base de données.

8. Dispositif selon l'une quelconque des revendications 1 à 7,
- comprenant en outre une première mémoire de données (332) et une deuxième mémoire de données (334),
- dans lequel le dispositif (200, 300, 406) est en outre amené à mémoriser l'unité d'information extraite (105) dans la première mémoire de données (332),
- dans lequel la vérification de l'unité d'information extraite (105) comprend :
- vérifier l'unité d'information (105) mémorisée sur la première mémoire de données (332) pour obtenir un résultat de vérification,
- dans lequel le dispositif (200, 300, 406) est en outre amené à mémoriser l'unité d'information extraite (105, 115) ou une unité d'information (115) générée sur la base de l'unité d'information extraite sur la seconde mémoire de données (334) en fonction du résultat de vérification.

9. Dispositif selon l'une des revendications 1 à 8,
dans lequel le dispositif (200, 300, 406) est conçu pour extraire des unités d'information (105) de messages d'entrée (101, 121) ayant des structures en couches différentes en faisant passer le message d'entrée respectif (101, 121) à travers une pile de protocoles (107) associée à la structure en couches respective (103) de bas en haut.

10. Dispositif selon l'une quelconque des revendications 1 à 9,
dans lequel le dispositif (200, 300, 406) est conçu pour générer des messages de sortie (114, 134) avec différentes structures en couches (103, 113) en faisant passer une unité d'information (105, 115) à travers une pile de protocoles (107, 117) associée à la structure en couches respective (103, 113) de haut en bas.

11. Dispositif selon l'une quelconque des revendications 1 à 10,
- dans lequel le dispositif (200, 300, 406) est en outre amené à effectuer ce qui suit:
- recevoir un message d'entrée dans le sens retour (121) via la deuxième interface (118., 204, 306), le message d'entrée dans le sens retour (121) ayant une troisième structure en couches (103, 113) et contenant une unité d'information dans le sens retour associée à la couche la plus haute de la troisième structure en couches (103, 113),
- extraire l'unité d'information dans le sens retour du message d'entrée dans le sens retour (121) en faisant passer le message d'entrée dans le sens retour (121) à travers une pile de protocoles (107, 117) associée à la troisième structure de couches (103, 113) de bas en haut,
- vérifier l'unité d'information dans le sens retour extraite pour obtenir un résultat de vérification dans le sens retour,
- générer un message de sortie dans le sens retour (134) en faisant passer l'unité d'informations dans le sens retour extraite ou une unité d'informations dans le sens retour générée sur la base de l'unité d'informations dans le sens retour extraite à travers une pile de protocoles associée à une quatrième structure de couches, de haut en bas, et
- envoyer le message de sortie dans le sens retour (134) via la première interface (104, 202, 302),
- dans lequel la génération et/ou l'envoi du message de sortie dans le sens retour (134) sont effectués en fonction du résultat de la vérification dans le sens retour.

12. Dispositif selon l'une quelconque des revendications 1 à 11,
dans lequel le dispositif est en outre amené à effectuer ce qui suit :
- générer une unité d'information (115) sur la base de l'unité d'information extraite (105).

13. Système (400),
- avec un premier réseau de communication (102, 304, 402),
- avec un deuxième réseau de communication (116, 308, 404) séparé du premier réseau de communication (102, 304, 402) et
- avec un dispositif (200, 300, 406) selon l'une des revendications 1 à 12,
- dans lequel la première interface (104, 202, 302) est connectée au premier réseau de communication (102, 304, 402) et la seconde interface (118, 204, 306) est connectée au second réseau de communication (116, 308, 404).

14. Système selon la revendication 13, dans lequel le premier réseau de communication (102, 304, 402) et/ou le deuxième réseau de communication (116, 308, 404) est un réseau OT.

15. Système selon la revendication 13 ou 14,
- dans lequel un appareil (410), en particulier une machine de production, est connecté au deuxième réseau de communication (116, 308, 404), et
- dans lequel la vérification de l'unité d'information extraite (105) comprend :
- vérifier la conformité de l'unité d'information extraite (105) avec une exigence de conformité de données prédéterminée ou obtenue pour le dispositif (410).

16. Procédé (100) mis en œuvre par au moins un dispositif, en particulier un dispositif (200, 300, 406) selon l'une des revendications 1 à 12, comprenant au moins les étapes suivantes :
- recevoir un message d'entrée (101) via une première interface (104, 202, 302) connectée à un premier réseau de communication (102, 304, 402), le message d'entrée (101) ayant une première structure en couches (103) et contenant une unité d'information (105) associée à la couche la plus haute de la première structure en couches (103),
- extraire l'unité d'information (105) du message d'entrée (101) en faisant passer le message d'entrée (101) de bas en haut à travers une pile de protocoles (107) associée à la première structure en couches (103),
- vérifier l'unité d'information extraite (105) pour obtenir un résultat de vérification,
- mémoriser temporairement l'unité d'information (105, 115) ou une unité d'information générée sur la base de l'unité d'information extraite (115), en fonction du résultat de vérification, dans une mémoire de données (212, 332, 334, 338),
- générer un message de sortie (114) en faisant passer l'unité d'information mémorisée temporairement (105, 115) ou une unité d'information (115) générée sur la base de l'unité d'information mémorisée temporairement(105, 115) à travers une pile de protocoles (117) associée à une deuxième structure en couches (113) de haut en bas,
- recevoir une demande d'informations via la deuxième interface (118, 204, 306), et
- envoyer le message de sortie (114) via une deuxième interface (118, 204, 306) connectée à un deuxième réseau de communication (116, 308, 404) séparé du premier réseau de communication (102, 304, 402),
- la génération et/ou l'envoi du message de sortie (114) étant effectués en fonction du résultat de vérification, et
- dans lequel l'envoi du message de sortie (114) est effectué en réponse à la réception de la demande d'informations.

17. Code de programme informatique (209, 313) qui, lorsqu'il est exécuté sur un dispositif (200, 300, 406) selon l'une quelconque des revendications 1 à 12, amène le dispositif à mettre en œuvre le procédé selon la revendication 16.
